# EUROPÄISCHE PATENTSCHRIFT

(11) **EP 1 808 387 B1**
(45) Veröffentlichungstag und Bekanntmachung des Hinweises auf die Patenterteilung: **26.12.2012**
(21) Anmeldenummer: 07000610.1
(22) Anmeldetag: 12.01.2007
(51) Int. Cl.: B65G 67/20, B65G 19/02

(54) **Logistiksystem**
Logistics system
Système logistique

(30) Priorität: 12.01.2006 DE 102006001802; 24.05.2006 DE 102006024472
(43) Veröffentlichungstag der Anmeldung: 18.07.2007
(60) Teilanmeldung: 11195395.6
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ, Speiser & Partner

(56) Entgegenhaltungen:
- EP-A- 0 467 586
- EP-A- 1 621 482
- WO-A-87/04140
- WO-A-93/17944
- WO-A-2005/066047
- AU-B2- 586 618
- CH-A- 512 346
- DE-A1- 3 244 232
- DE-A1- 3 533 784
- DE-A1- 3 714 638
- DE-A1- 19 622 792
- DE-A1- 19 940 093
- GB-A- 1 424 867
- LU-A1- 88 695
- US-A- 3 710 961
- US-A- 4 016 991
- US-A- 4 197 047
- US-A- 4 457 424
- US-A- 4 832 559
- US-A1- 2002 085 904

## Beschreibung

Die Erfindung betrifft ein Logistiksystem nach dem Oberbegriff des Anspruchs 1, wie es aus der EP0 467 586 A1 bekannt ist. Als Stand der Technik sei allgemein auf folgende Druckschriften hingewiesen: JP 05-270650 A, DE 37 14 638 A1, US 2003/228208 A1, DE 1 962 291 A1, DE 200 16 115 U1, DE 100 14 990 A1, DE 196 40 977 C2, DE 33 00 441 A1, DE-OS 24 51 070, DE 40 31 883 C2, DE 42 05 001 C2, US-PS 4,566,838, DE 25 53 221 A1, DE 39 23 062 A1, DE 44 16 214 C2 sowie DE 102 35 843 B3.

Aus DE 19 62 291 ist eine Vorrichtung zum schnellen Be- und Entladen von Lastkraftwagen mit Stückgütern, vorzugsweise gleichartiger Verpackung bekannt, bei dem die als Stückgüter bezeichneten Waren auf einer einzigen Ladeplattform liegen, welche auf die Ladefläche des Fahrzeugs, also des Lastkraftwagens geschoben werden können. Diese Plattform weist hierbei unterseitig Rollen zur Längsverfahrung auf die Plattform auf. Die Plattform selbst ist an das Innenmaß der Ladefläche angepasst, d.h. etwas kleiner als die Ladefläche, damit die gesamte Plattform auf die Ladefläche geschoben werden kann, ohne die Seitenwandung der Ladefläche zu beschädigen. Um genau das zu erreichen, sind auch Führungsbahnen auf der Ladefläche ausgebildet, so dass die Plattform auf der Ladefläche sicher geführt wird.

Dieser Stand der Technik offenbart aber nicht, wie eigentlich die Plattform schnell und sicher auf die Ladefläche gebracht werden kann bzw. von dieser wieder heruntergebracht werden kann.

Es ist auch schon bekannt, dass bei ähnlichen Einrichtungen, die aus DE 19 62 291 bekannten, auf dem Fahrzeug selber Fördereinrichtungen ausgebildet sind, um somit die gesamte Ladeplattform auf der Ladefläche zu verschieben, was dann auch den besonderen Vorteil haben kann, dass die Plattform selbst nicht mit Rollen o. dgl. versehen sein muss. Gleichwohl ist offensichtlich, dass diese Lösung einen erheblichen Nachrüstbedarf am Lastkraftwagen hat und damit auch das gesamte Fahrzeug sehr teuer macht.

Dokument EP 0 467 586 A1 offenbart eine mobile einfahrbare Ladefläche, welche eine Plattform mit einer am Boden laufenden Lagerfläche zum lösbaren Anheben und Stützen einer darauf ruhenden Ladung gegenüber einer StützOberfläche an einer Ladungs-Sammelstation, sowie zum Übertragen jener angehobenen Ladung zu einer Auslieferstation, wo die Ladefläche eingefahren wird, um die Ladung zu deponieren, und anschließend davon abgezogen wird.

Schließlich ist auch eine so genannte LOADMATE LKW-Beladung bekannt, wie sie im Internet unter der Adresse www.csiweb.nl offenbart ist. Hierbei muss ebenfalls das Fahrzeug (Trailer) erheblich modifiziert werden, um eine Be- und Entladung zu ermöglichen. Die Modifizierung des Trailers gemäß dieser Lösung hat auch den Nachteil, dass ein erhebliches Ladevolumen durch eine etwa 15 bis 20 cm hohe Plattform, in der auch noch Luftkissen eingebaut sind, verringert wird.

Wenn im Einzel- oder Großhandel die zu transportierenden Waren z. B. von einem Zentrallager zu den Handelshäusern bzw. Einzelhandelsstätten transportiert werden, so geschieht dies häufig mit Lastkraftwagen, die eine umschlossene Ladefläche aufweisen. Die Waren für den jeweiligen LKW sind dabei schon im Lager vorkommissioniert, d. h. der jeweilige Warenbedarf für den Zielort wird auf der Lagerseite auf Paletten, bevorzugt Europaletten gestellt und bei der Beladung der Lastkraftwagen werden die auf den Paletten befindlichen Waren dann mittels Gabelstapler o. dgl. auf die Ladefläche des Fahrzeugs verfrachtet, wobei die Beladung unter unterschiedlichen Gesichtspunkten erfolgt, damit es eine optimale Beladung gibt. Da jede einzelne Palette vom Gabelstapler im Kommissionierungsbereich aufgenommen und dann auf die Ladefläche verfahren wird, dauert die gesamte Beladung des LKWs eine bestimmte Zeit, denn der Gabelstaplerfahrer bedarf auch etwas Rangierzeit auch auf dem LKW, um die einzelnen Paletten möglichst passgenau und dicht aneinander zu stellen. In der Regel kann davon ausgegangen werden, dass die gesamte LKW-Beladung etwa 30 bis 40 Minuten benötigt, wobei diese Zeit auch von der Übung des Ladepersonals abhängt. Während der Beladung steht der LKW und erbringt keine Transportdienstleistung.

Ein ähnliches Problem wie bei der Beladung gibt es dann auch bei der Entladung, denn auch diese Entladung dauert eine gewisse Zeit, meistens etwa 25 bis 40 Minuten.

Aufgabe der Erfindung ist es nun, die Zeit zur Be- bzw. Entladung von Fahrzeugen, die bevorzugt kommissionierte Waren transportieren, deutlich zu verkürzen und dabei einfach zu gestalten, ohne die Fahrzeuge aufwändig umzurüsten.

Erfindungsgemäß wird ein Logistiksystem mit den Merkmalen nach Anspruch 1 vorgeschlagen. Vorteilhafte Weiterbildungen sind in den Unteransprüchen sowie in den Zeichnungen und anderen Teilen der vorliegenden Anmeldung beschrieben.

Ziel der vorliegenden Erfindung ist es, nicht nur eine sehr kurze Be- und Entladung der Fahrzeuge mit Stückgütern/Waren zu ermöglichen, sondern dass dies auch geschieht mit den geringstmöglichen Veränderungen an den Fahrzeugen, denn jede Veränderung an den Fahrzeugen ist nicht nur aufwändig und teuer, sondern zieht auch automatisch eine veränderte Gewährteistungslage nach sich, so dass bei Schäden an dem Trailer/LKW/Fahrzeug derjenige hierfür u.U. haften muss, der zuletzt eine Änderung an dem Fahrzeug/Trailer/LKW vorgenommen hat. Außerdem sinken durch bauliche Veränderungen am LKW auch deren Wiederverkaufswerte, denn es ist ganz offensichtlich, dass bei solchen veränderten Trailern/LKWs/Fahrzeugen diese mit diesen Nachbauten bzw. Nachrüstungen nur dann weiter benötigt werden können, wenn die Fahrzeuge weiterhin in ein entsprechendes System eingebunden sind.

Die vorliegende Erfindung hat daher auch den besonderen Vorteil, dass ganz übliche Trailer/LKWs/Fahrzeuge eingesetzt werden können und etwaige Nachrüstungen sind - wenn überhaupt notwendig - extrem geringfügig und senken den Wiederverkaufswert nicht.

Bei dem erfindungsgemäßen Logistiksystem kann man grundsätzlich von drei verschiedenen Bereichen sprechen. Der erste Bereich ist der Bereich, in dem eine Plattform (mit oder ohne Güter/Waren) auf der Ladefläche eines Fahrzeugs, z. B. Trailers/LKWs liegt. Der zweite Bereich - der zentrale Bereich des Logistiksystems - ist eine Übergabestation, um die entsprechende Plattform an den ersten Bereich, also die Fahrzeuge, zu übergeben oder von dort her aufzunehmen. Der dritte Bereich ist der Lagerbereich, wobei es sich hier um Hochregallager, übliche Flachlager oder auch um den Kommissionierungsbereich eines Lagers handeln kann. Der Kommissionierungsbereich des Lagers ist dabei der Bereich, innerhalb dessen die Güter/Waren für die spätere Beladung der Fahrzeuge vorkommissioniert werden, also so zusammengestellt werden, wie dies für den Transport benötigt wird. Für die Kommissionierung werden regelmäßig einzelne Güter/Waren aus dem Lager geholt und dann im Kommissionierungsbereich zusammengestellt und zwar so, dass auch die Ladefläche nicht nur optimal ausgenutzt wird, sondern auch optimal, bevorzugt etwa gleichmäßig belastet wird. Es kann aber auch auf Wünsche des Transports Rücksicht genommen werden, z. B. dann, wenn der LKW nicht nur einen einzigen Zielort anfährt, sondern verschiedene Zielorte und nacheinander bestimmte Ladevorgänge in einer bestimmten Reihenfolge vorgenommen werden müssen.

Im Kommissionierungsbereich wird üblicherweise mit Gabelstaplern oder ähnlichen Vorrichtungen die Waren aus einem Lager entnommen, wobei diese Waren regelmäßig auf Europaletten liegen und im Kommissionierungsbereich müssen daher bevorzugt auch die Gabelstapler auf der Plattform fahren können.

Vorzugsweise wird nunmehr eine zentrale Plattform vorgeschlagen, welche von ihren Außenmaßen an das Innenmaß der Ladefläche eines Fahrzeugs, z. B. eines LKW-Trailers angepasst ist. Anpassung bedeutet hier, dass die Plattform etwas kleiner ist als die Ladefläche um somit ein Schieben der Plattform auf die Ladefläche zu ermöglichen, ohne hierbei die Seitenwände der Plattform zu beschädigen.

Damit solche Beschädigungen nicht auftreten bzw. eine optimale Beförderung der Plattform auf die Ladefläche bzw. von der Ladefläche weg erfolgt, ist die Übergabestation vorgesehen, welche eine Ausrichtung ermöglicht, damit die Plattformen von der Übergabestation fluchtend auf die Ladefläche verschoben werden können bzw. von dieser Ladefläche abgeholt werden können. Dazu ist die Übergabestation bevorzugt schwenkbar ausgerichtet, und zwar schwenkbar sowohl um die zentrale Vertikalachse, um sich exakt fluchtend auf die LKW-Ladefläche ausrichten zu können als auch verschwenkbar quer zur Förderrichtung der Plattform (Seitenlagen versetzt), was besonders dann notwendig ist, wenn der LKW nicht zentral vor der Übergabestation steht, sondern etwas, z. B. einige Zentimeter (20 bis 30 cm) versetzt hierzu.

Gleichzeitig muss auch dafür gesorgt werden, dass die Ladeplattform sich in der richtigen Höhe befindet, um exakt fluchtend mit der Höhe der Ladefläche auf diese verschoben werden zu können bzw. von dieser abgehoben werden zu können. Hierzu weist die Übergabestation eine weitere Vorrichtung auf, mittels der der hintere Teil der Ladefläche angehoben werden kann bzw. der gesamte Trailer mit der Ladefläche so angehoben werden kann, dass die Oberfläche der Übergabestation sich auf gleicher Höhe befindet wie die Ladefläche des Fahrzeugs.

Natürlich ist es auch möglich, statt einer solchen Hebe-/Senkstation für die Ladefläche eine entsprechende Hebe-/Senkvorrichtung für die gesamte Übergabestation vorzusehen.

Weitere Details der Erfindung sind in der nachfolgenden Beschreibung und in den Zeichnungen ausgeführt.

Es ist zu hierbei zu ersehen, dass die Übergabestation eine Längsfördereinheit aufweist, welche die Längsförderung der Plattform in Richtung der Ladefläche bzw. von dieser weg ermöglicht. Diese Fördereinrichtung weist einerseits einen Kettenantrieb auf, an welchem Mitnehmer ausgebildet sind. Diese Mitnehmer können mit Ausnehmungen, die sich an der Unterseite der Plattform befinden, in Eingriff gebracht werden, um somit die gesamte Plattform in Längsrichtung zu verschieben. Mit einer solchen Verschiebung ist es aber u. U. noch nicht möglich, die gesamte Plattform auch auf die Ladefläche zu verschieben, jedoch ist dies bis zu 80 bis 95% des Verfahrensweges möglich. Für den letzten Rest der Verschiebung ist an der Übergabestation, also der Längsfördereinrichtung, ein Haken ausgebildet, welcher mit einer weiteren Ausnehmung, nämlich an der vorderen Kante, also am oberen Rand der Plattform, zusammenwirkt. Hierbei ist an der Fördereinrichtung ein Haken ausgebildet, der sich in dieser Ausnehmung (auch Tasche genannt) hineinbewegen kann, um einerseits für die letztmögliche Verschiebung der Plattform auf die Ladefläche zu sorgen oder, wenn die Plattform sich auf der Ladefläche befindet, um die Plattform ein bestimmtes Stück weit, z. B. 1 bis 2 m, in Richtung Übergabestation anzuziehen. Der Haken selbst ist mit einer hydraulischen oder motorischen Längsfördereinheit verbunden, um somit die translatorische Bewegung der Plattform zu ermöglichen.

Es ist auch möglich, die Plattform selbst mit einer Verriegelungsvorrichtung vorzusehen, um somit eine sichere Fixierung der Plattform auf der Ladefläche zu ermöglichen. Hierbei ist es besonders vorteilhaft, wenn auf der Ladefläche seitlich jeweils eine Schiene links und rechts angebracht wird, die mit der Verriegelungsvorrichtung zusammenwirkt. Die Verriegelung steht dabei bevorzugt unter Federkraft. Die Verriegelungswirkung wird dann aufgehoben, sobald der Haken mit der Tasche in Eingriff steht und die Verriegelungswirkung wird wieder hergestellt, sobald der Haken wiederum die Tasche verlässt.

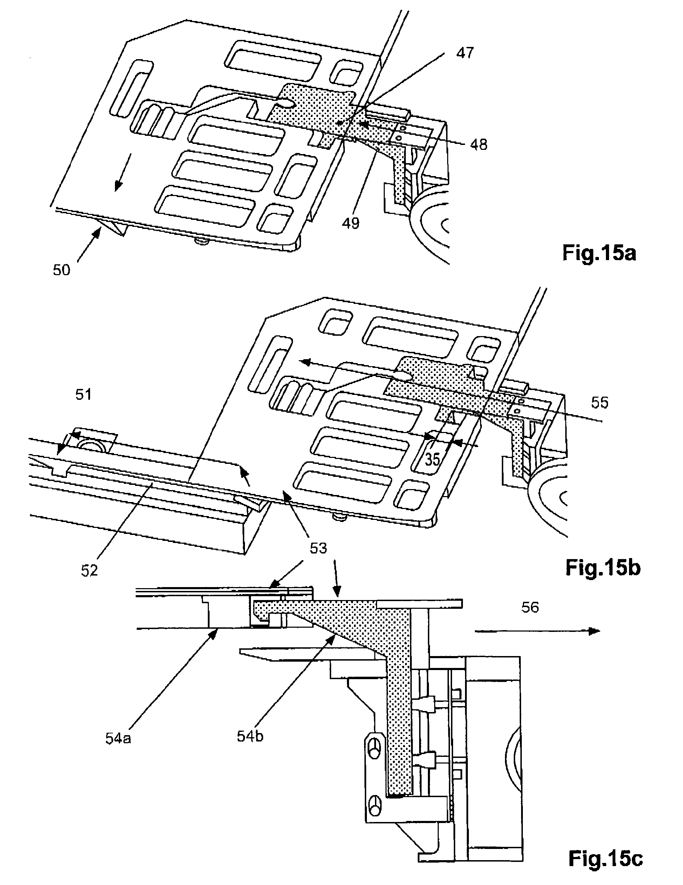

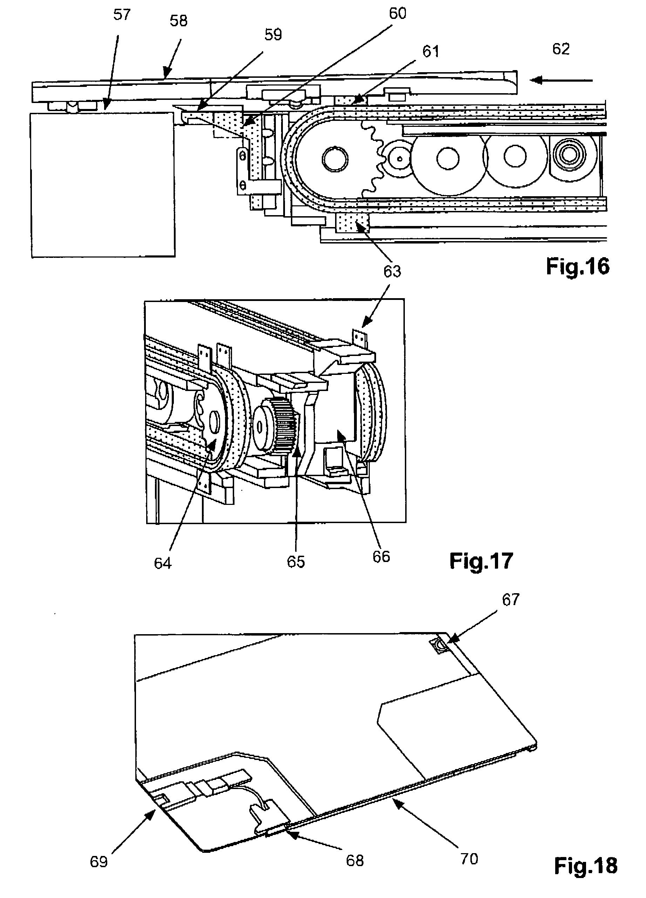

An den Schienen können jeweilige Ausnehmungen ausgebildet sein, die mit entsprechenden Vorsprüngen der Verriegelung in Eingriff stehen (s. Figuren 15a, 15b und 18).

Für die Fixierung der Plattform auf der Ladefläche kann auch eine teleskopartig verlängerbare Stange vorgesehen sein, welche bei Lagerung der Plattform auf der Lagerfläche den Bewegungsweg von der Ladefläche weg versperrt und diese teleskopartige Verlängerung steht dann mit den Seitenwänden der Ladefläche in Eingriff. Diese teleskopartige Verlängerung kann auch eine handbetätigte Verriegelungsvorrichtung sein und die einzige Anpassung der Ladefläche an diese Verriegelungsvorrichtung ist dann in den Ausnehmungen in der Wand der Ladefläche vorzunehmen.

In der nachfolgenden Figurenbeschreibung sind wesentliche Details der Erfindung dargestellt.

Wenn der Begriff Wechselpalette verwendet wird, so handelt es sich hierbei um einen alternativen Begriff zu Plattform.

Die komplette LKW-Ladung wird erfindungsgemäß auf einer solchen Plattform (Wechselpalette) kommissioniert, welche in ihren Abmaßen den Innenmaßen eines Sattelauflegers (Trailers) entspricht. Eine Wechselpalette kann komplett mit Ladung auf einen Sattelaufleger verschoben werden. Außerdem kann das erfindungsgemäße Logistiksystem mit Wechselpaletten die Ladung in ein seitlich angebrachtes Regal einlagern. Das Regal des Logistiksystems besteht aus wenigstens zwei Einlagerungseinheiten, kann aber auf acht und mehr Lagerpaletten erweitert werden.

Die Übergabestation mit ihrer Längsfördereinheit ermöglicht eine Beladezeit des gesamten LKWs von etwa 180 Sekunden, was eine Längsfördergeschwindigkeit von etwa 0,082 m/sec erfordert.

### Die Figuren zeigen:

- Figur 1: einen Lagerbereich,
- Figuren 2a, b: Fördermöglichkeiten der Transportpalette,
- Figur 3: eine Lichtzeichenanlage als Einfahrhilfe,
- Figur 4: ein Ausgleich der Schiefstellung,
- Figur 5: ein Ausgleich der Schiefstellung,
- Figur 6a bis 6e: verschiedene Stellungen einer Längsfördereinheit,
- Figur 7: Abstützungen mit INI Anfrage,
- Figur 8: die Ansteuerung von Regalböden,
- Figur 9: die Position von Fördemocken,
- Figur 10: eine Transportpalette,
- Figur 11: eine weitere Abbildung,
- Figur 12: eine Längsfördereinheit,
- Figur 13: eine weitere Abbildung,
- Figur14: ein Entfernungsmesssystem,
- Figuren 15a, 15b: Details zum Beladen eines LKW,
- Figur 15c: ein Detail zum Entladen eines LKW,
- Figuren 16 bis 18: weitere Details des Beladens eines LKW,

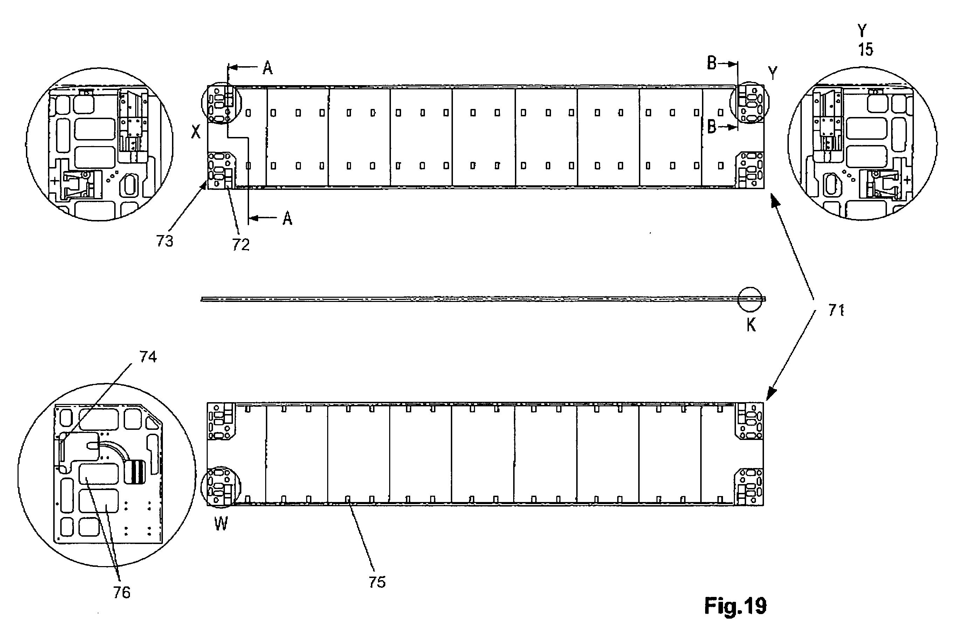

- Figur 19: eine weitere Abbildung einer Plattform,

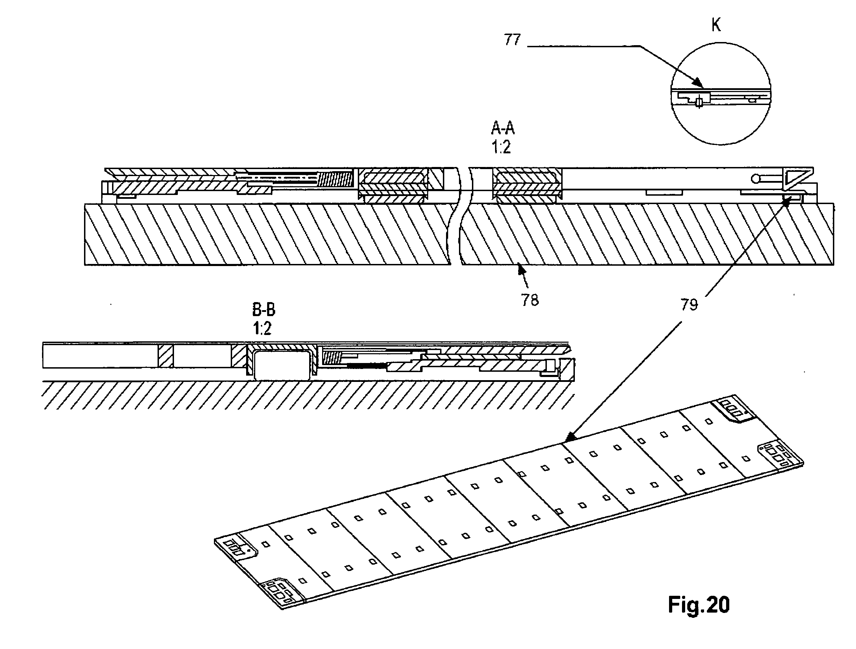

- Figur 20: eine weitere Abbildung einer Plattform,

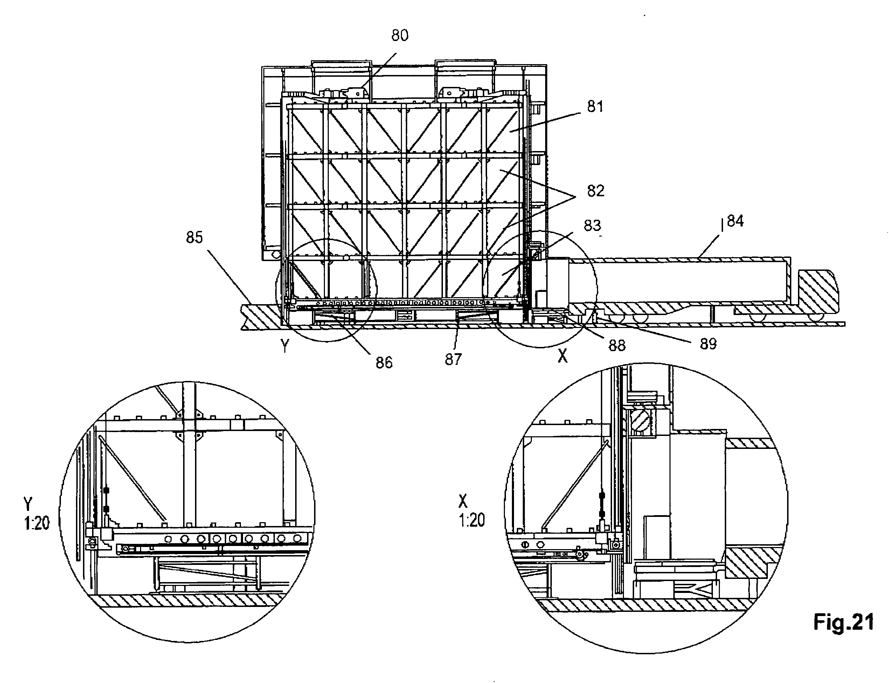

- Figur 21: eine weitere Abbildung,

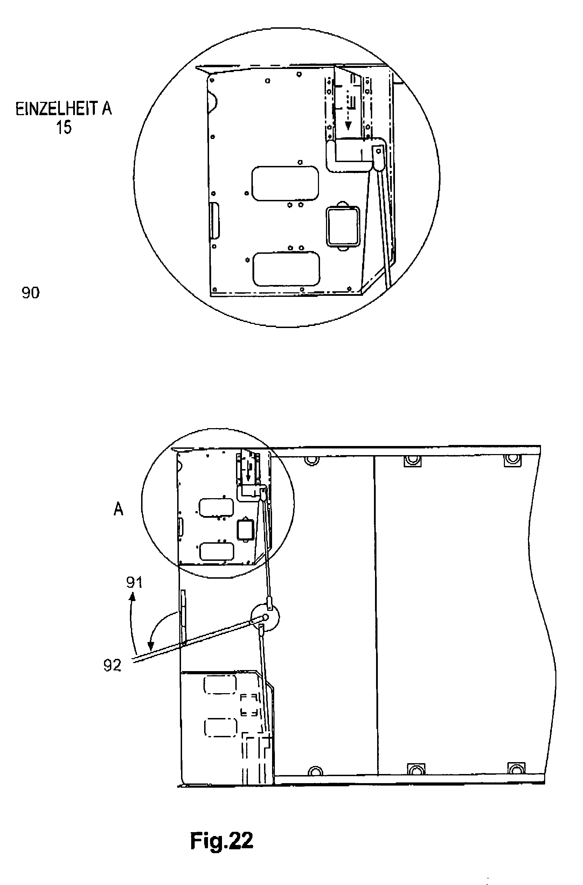

- Figur 22: eine Abbildung zur Verriegelung,

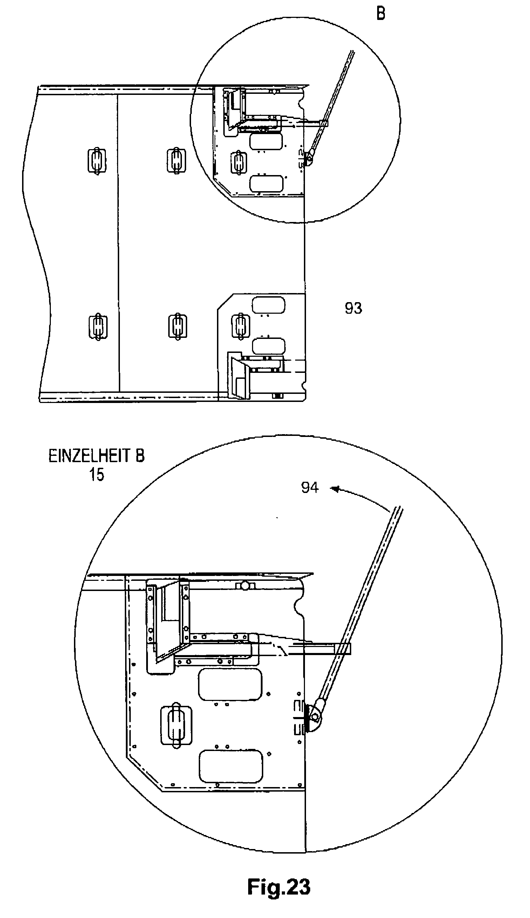

- Figur 23: eine Abbildung zur Verriegelung,

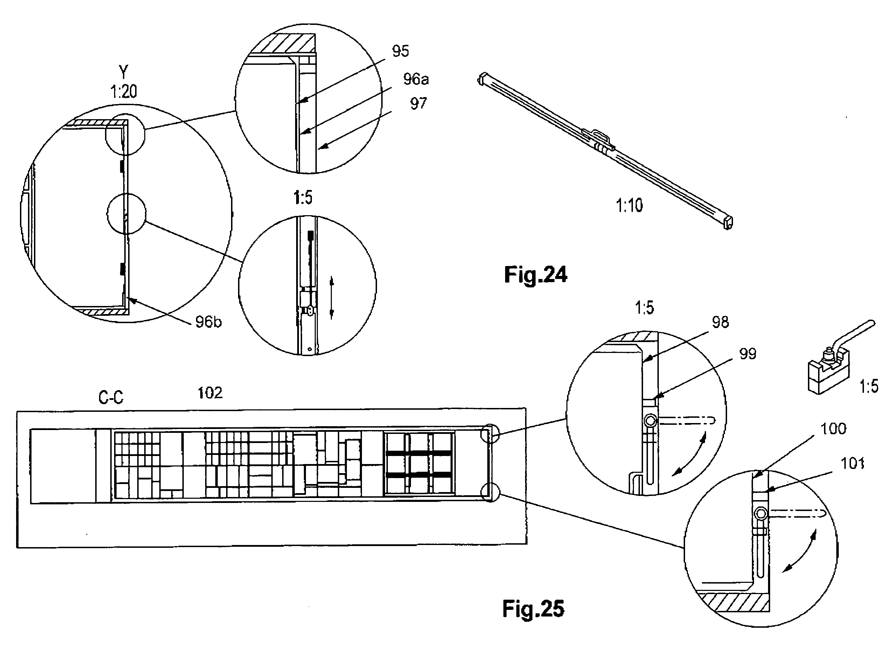

- Figur 24: eine Abbildung zur Verriegelung,
- Figur 25: eine Abbildung zur Verriegelung,

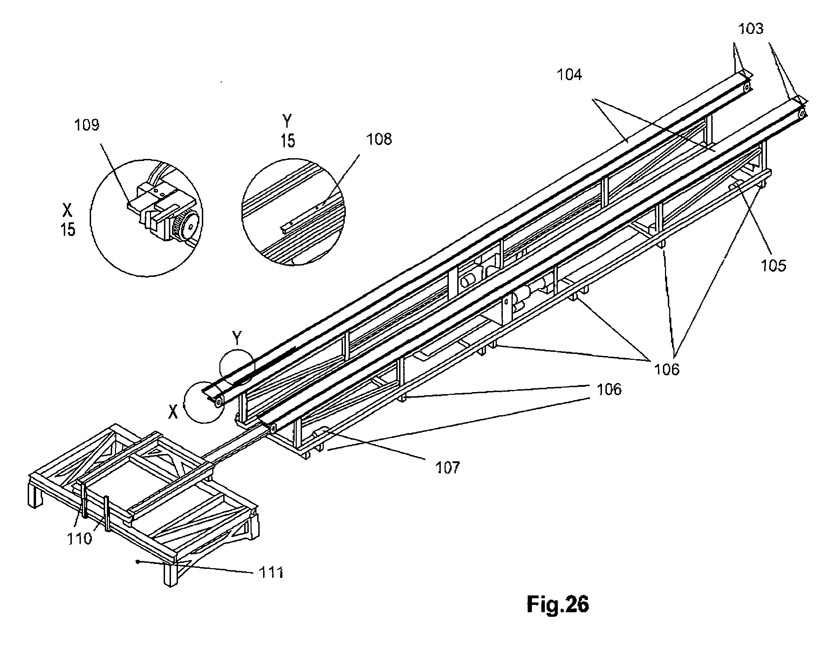

- Figur 26: eine weitere Abbildung,
- Figur 27: eine Darstellung einer Plattform,

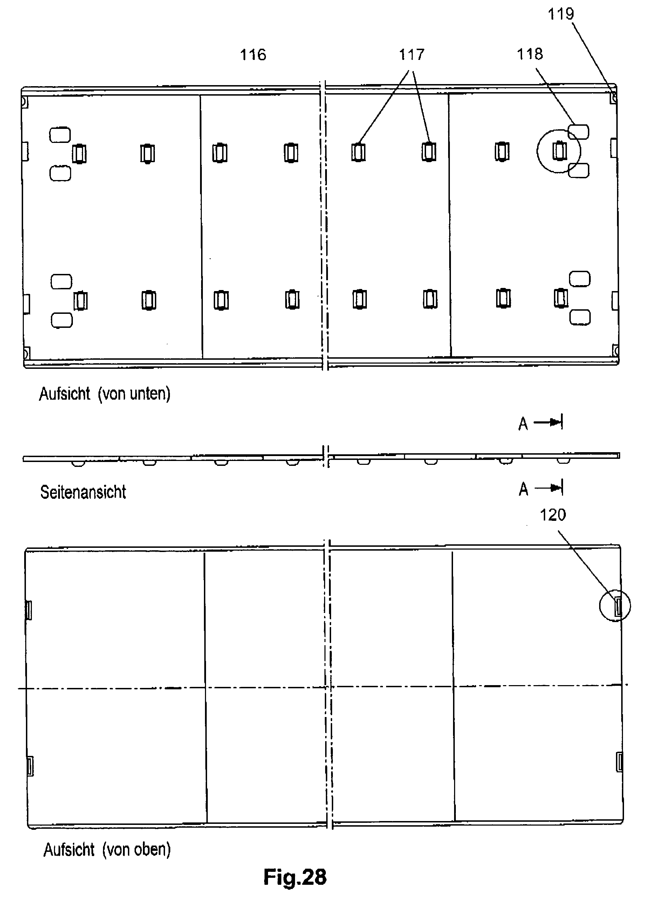

- Figur 28: eine weitere Abbildung,
- Figur 29a bis d: das Verfahren eines Portalkrans in einem Kommissionierungsbereich,
- Figur 30: einen Lagerbereich mit Ladungsträgerspeicher,
- Figur 31: eine perspektivische Ansicht eines Portalkrans,
- Figur 32: eine vergrößerte Teilansicht eines Portalkrans aus Figur 31,
- Figur 33 e: ine weitere Teilansicht des Portalkrans von Figur 31,
- Figur 34: eine perspektivische Ansicht eines Portalkrans gemäß einem weiteren Ausführungsbeispiel,
- Figur 35: eine Teilansicht des Portalkrans von Figur 34,
- Figur 36: eine weitere Teilansicht des Portalkrans von Figur 34,
- Figur 37: einen rechteckigen Holm aus Metall,
- Figur 38: ein Geländer mit vertikalen Rohren,
- Figur 39: die Anordnung aus Figuren 37 und 38, in alternativer und ergänzender Form,
- Figur 40a: eine Aufsicht auf den Ladungsträger,
- Figur 40b: einen in Figur 40a dargestellten Ladungsträger,
- Figur 40c: den in Figur 40a dargestellten Ladungsträger von der Unterseite,
- Figur 41 a: in der Obenaufsicht zwei voneinander gelöster Ladungsträgerelemente,
- Figur 42: weitere Ansichten eines Ladungsträgerelementes,
- Figur 42a: die Oberseite einer Endsektion,
- Figur 42b: die Unterseite einer Endsektion,
- Figur 42c: eine vergrößerte Darstellung einer Unterseite einer Endsektion,
- Figur 42d: eine Gesamtansicht des Ladungsträgerelementes,
- Figur 42e und f: in einer vergrößerte Darstellung der Funktionsweise der Veriegelung und
- Figur 43: eine weitere Ausführungsform einer Plattform.

### Allgemeine Funktionsbeschreibung

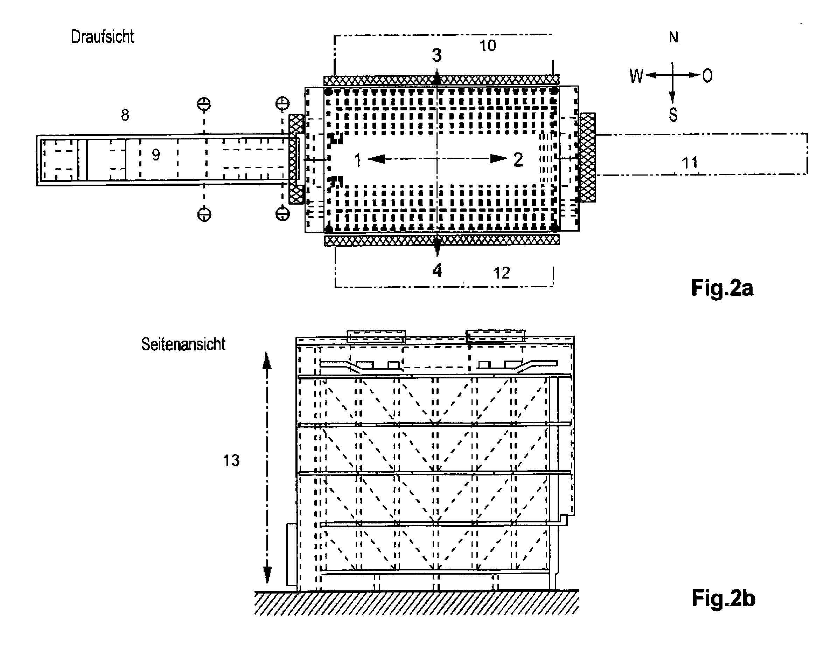

Die Aufgabe des Logistiksystems ist die Zwischenlagerung von Stückgut in einem Regalsystem. Das Stückgut wird auf eine Transportpalette kommissioniert und mit der Längsfördereinheit auf das Regalbediengerät (RBG) gefördert. Die Steuerung des SL fördert die Transport-Palette zum nächstgelegenen freien Regalplatz, wo es mit Hilfe der Querverfahreinheit der RBG in das Regal eingeschoben wird. Im Regal wird die Palette gegen unbeabsichtigtes eigenständiges Herauslaufen gesichert. Die Palette kann zum Auslagern auf den Bereitstellungsplatz zurückgefahren werden oder zum Beladen eines LKW transportiert werden. Die Fördermöglichkeiten der Transportpalette im Regal können wie folgt gewählt werden: 1 - 2; 1 - 3; 1 - 4 (Fig. 2a,b). Die Orientierung im Regal ist nach den Himmelsrichtungen bezeichnet (Fig. 2a,b).

### Beladen eines LKWs mit dem Logistiksystem

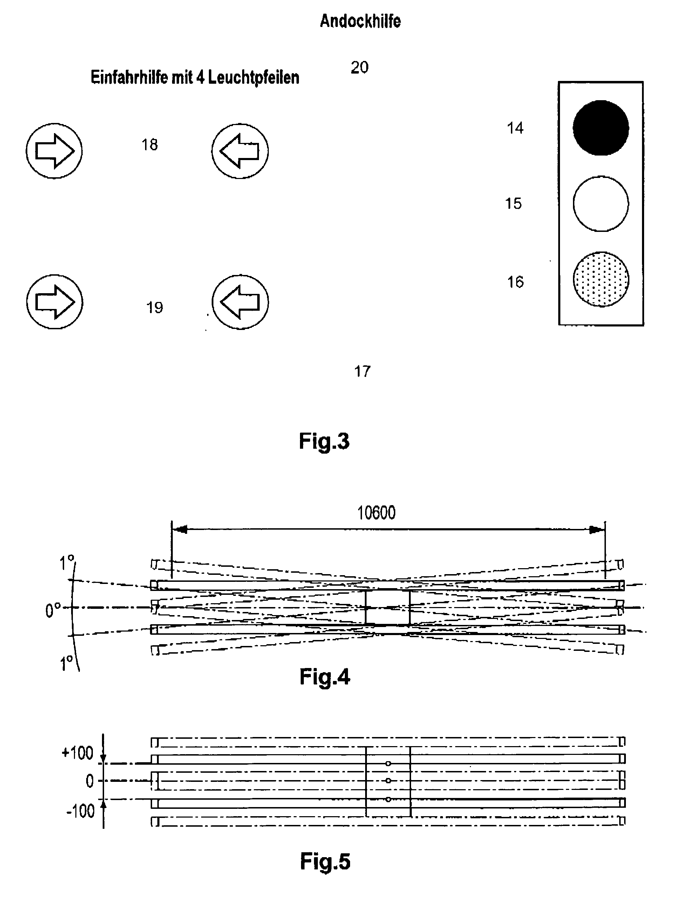

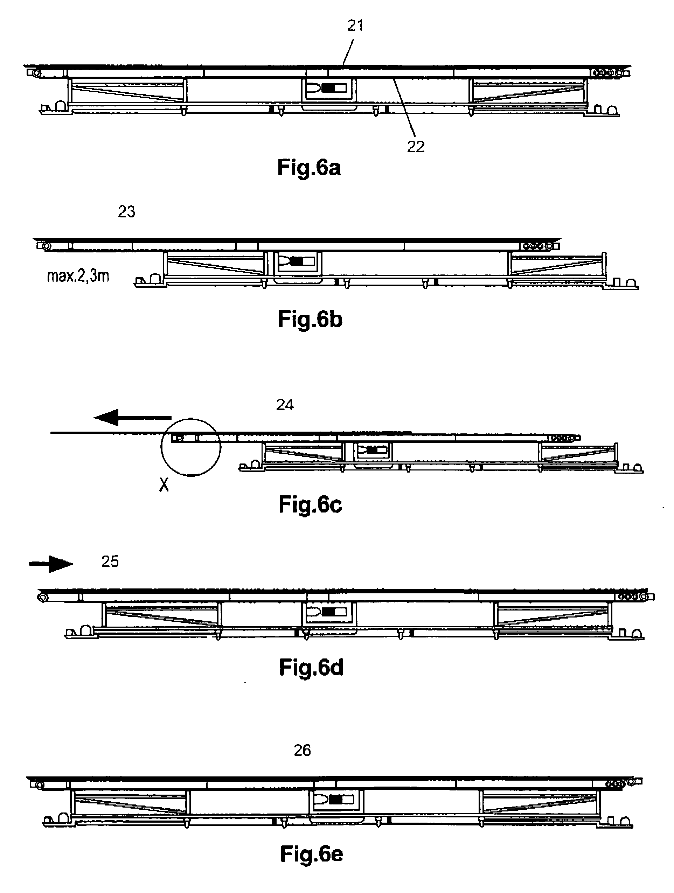

Der LKW fährt rückwärts an die Auslagerungsseite des SL. An der Andockhilfe leuchtet die grüne Leuchte, die Anlage ist bereit. Die grobe Parkposition ist durch Linien auf dem Boden gekennzeichnet. Der Sattelauflieger wird durch ein analoges Entfernungsmessgerät DT500-A211 der Fa. Sick in seiner Parkposition zum SL vermessen. Die Messergebnisse werden über eine Lichtzeichenanlage der Einfahrhilfe mit aufleuchtenden Pfeilen an den Lkw Fahrer übermittelt (Fig. 3). Die Messungen werden mit der Einfahrt des LKWs vor dem SL gestartet. Ca. 200mm vor dem Endanschlag am Logistiksystem leuchtet die gelbe Leuchte an der Lichtzeichenanlage. Nachdem der LKW in Position gebracht wurde, leuchtet die rote Leuchte an der Andockhilfe. Das Heck des Aufliegers wird zur Stabilisierung hydraulisch aufgebockt. Die Feineinstellung der genauen Parkposition erfolgt durch die Längsfördereinheit. Steht der Auflieger außerhalb der Toleranz, wird dies dem Fahrer mittels der Lichtzeichenanlage angezeigt. Ein erneuter Parkversuch ist nötig. Anschließend muss die gewünschte Palette am Bedientableau des Logistiksystems angewählt werden. Zum Auslagern einer Transport-palette fährt das RBG zum Regalplatz der gewünschten Palette. Die Palette wird von der Steuerung entriegelt und von der Querfördereinheit auf das RBG gezogen. Das Regalbediengerät (RGB) setzt anschließend die Palette auf die Längsfördereinehit ab (Fig. 6a) und fährt dann in eine Warteposition unterhalb der Längsfördereinheit. Diese richtet dann die Palette nach den Messergebnissen des Messgerätes DT500-A211 zum Sattelauflieger aus. Dabei liegt der Ausgleich der Schiefstellung bei ± 1° (Fig. 4) oder bei ± 100 mm (Fig. 5).

Nun misst einer der beiden Abstandmesssensoren O1D100, die sich an der Längsfördereinheit befinden (Fig. 16), den Abstand zu einem Fixpunkt am LKW (X-Achse). Die Längsfördereinheit mit der Palette fährt nun bis auf einen definierten Abstand von ca. 5 mm zum LKW vor (Fig. 6b). Ist die Längsfördereinheit an ihrem Endpunkt angekommen, wird die Palette von der Einheit auf den LKW gefördert (Fig. 6c). Das Kettensystem der Längsfördereinheit ist mechanisch bedingt nicht in der Lage, die Transportpalette in ganzer Länge auf den Auflieger zu fördern. Um die letzten 300-400 mm Förderweg zu absolvieren, werden zwei Haken ausgefahren (Fig. 16). Dazu muss der Förderweg 1 um ca. 600 mm eingefahren zurückgefahren werden (Fig. 6d). Dann werden die Verfahrmechanismen der zwei Haken vom Fahrer angebracht über eine elektrische Kupplung aktiviert (Fig. 17). Über den Antrieb der Ketten (Förderweg 2) werden die Haken nach oben verfahren. Während des Hochfahrens erfassen hierbei die Abstandssensoren O1 D100 die Unterkante der Palette. Von diesem Punkt aus muss der Haken noch ca. 15 mm hoch gefahren werden, damit der Haken die Tasche in der Palette sicher trifft. Nun wird die Palette auf den LKW geschoben. Dies geschieht durch die Bewegung des Förderweges 1. In die Palette sind Verriegelungen integriert, die als rückwärtige Sicherung der Palette auf dem LKW dienen (Fig. 18) Beim Einfahren der Haken in die dafür vorgesehenen Taschen der Palette werden diese Verriegelungen mechanisch betätigt und fahren per Federdruck aus. Die Auslösung erfolgt über einen Stift, der in einem Schlitten integriert ist. Dieser Schlitten hat einen Betätigungsweg von 35 mm und wird noch vor dem eigentlichen Palettenvorschub über den Fahrweg 1 verfahren (Fig. 15a). Die Verriegelungen werden während der Einfahrt zunächst über die Seitenschienen im LKW zurückgedrückt und rasten dann beim Erreichen der Endposition in diese Seitenschienen ein, die Palette ist gesichert (Fig. 15b).

Um die Einfahrbewegung des Schlittens (35 mm) zu kontrollieren, kann der Abstandssensor O1D100 den Abstand zur Palette prüfen.

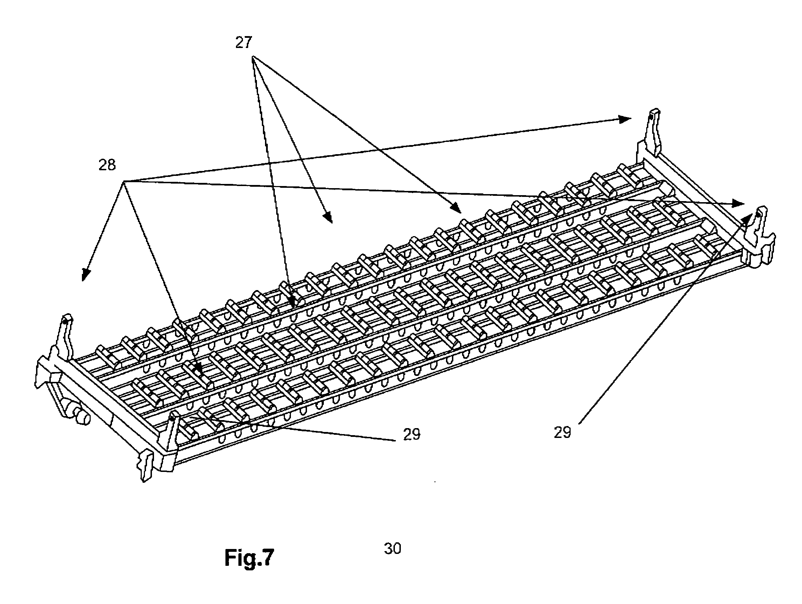

Anschließend fährt die Längsfördereinheit zurück in die Grundstellung (Fig. 6e) und stellt die 0°-Position wieder her (Fig. 4, Fig. 5), die Haken werden während der Rückfahrt wieder herabgefahren (el. Kupplung + Förderweg 2). Die Grundstellung wird durch drei Initiatoren kontrolliert (Fig. 7).

Der gesamte Ablauf ist voll automatisch. Nachdem alles in Grundstellung gefahren und die Hubeinheit für den LKW wieder eingefahren ist, leuchtet wieder die Grüne Leuchte der Andockeinheit und der LKW kann losfahren.

### Entladen eines LKWs mit dem Logistiksystem

Der LKW wird vor dem Logistiksystem positioniert, wie in Pos. 1.5.1 beschrieben. Der Fahrer drückt a m Bedientableau die Funktion zum Entladen des LKWs. Das RBG fährt in die unterste Warteposition zur Aufnahme der Palette. Die Längsfördereinheit richtet sich zum LKW aus, anhand der Entfernungsmessdaten des Messgerätes DT500-A211. Dann wird der Förderweg 1 ausgefahren, Abstandssensor O1D100 erfasst den Messpunkt am LKW und stoppt den Vorschub. Nun werden die Haken hochgefahren, hierbei erfassen die beiden Abstandssensoren O1D100 1. die Unterkante der Palette (Haken fährt ca. 15 mm höher), außerdem wird 2. der Abstand zur Palettenvorderkante geprüft. Bei Schieflage der Palette kann die Längsfördereinheit noch geringfügige Korrekturen der Lage vornehmen, evtl. muss der Vorgang abgebrochen werden. Der LKW muss dann noch einmal die Gesamtposition korrigieren.

Bei korrekter Positionierung fahren die Haken über den Förderweg 1 in die Taschen ein, die Abstandssensoren überwachen die Einfahrtiefe. Nun muss der Haken ca. 20 mm abgesenkt werden, um einzuhaken (Fig. 15c). Beim Herausziehen (Förderweg 1) wird zunächst die Verriegelung über den Betätigungsschlitten in die Palette gezogen. Der Abstandssensor 01D100 überwacht diesen Vorgang. Danach wird die Palette ca. 400 mm aus dem LKW gezogen.

Nach dem Ausfahren der Palette auf die Übergabeposition auf Fahrweg 2 werden die Haken wieder angehoben, über Förderweg 1 aus der Palette gefahren und wieder vollständig abgesenkt. Der Förderweg 1 fährt wieder bis zum LKW vor und das Kettensystem des Förderweges 2 transportiert die Palette auf die Längsfördereinheit. Ist die Palette auf der Einheit, wird sie mittels des Förderweges 1 in das Regal gezogen. Die Längsfördereinheit stellt sich wieder in die 0°-Position. Daraufhin kann die Palette mit dem RBG eingelagert werden oder mit der Längsfördereinheit auf den Bereitstellungsplatz gefahren werden. Die Anlage fährt anschließend in die Grundposition.

### BG 01 Hubeinheit

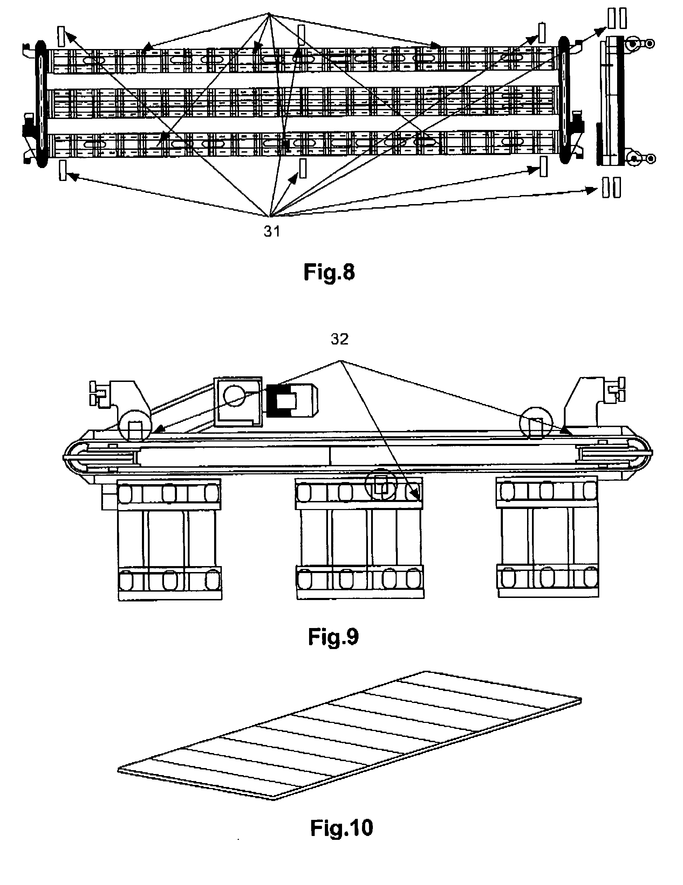

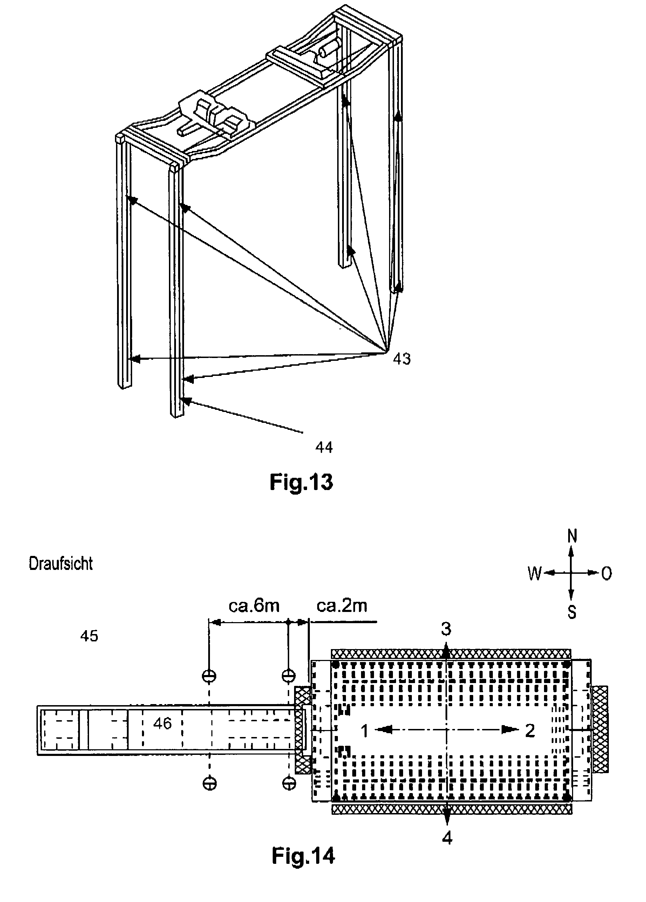

Die Hubeinheit bewegt das RBG in die einzelnen Regalebenen. Diese Bewegung wird durch zwei Getriebemotoren und vier Seiltrommeln umgesetzt. Die Getriebemotoren treiben jeweils zwei Seiltrommeln über eine drehelastische Kupplung an. Sie bestehen aus einem Vorschaltgetriebemotor und einem Hauptgetriebe. Sie werden über Frequenzumrichter der Fa. SEW angesteuert. Für die seitliche Stabilität sorgen Führungen, welche in den Stützen der Hubeinheit untergebracht sind. Die beiden Hubantriebe müssen synchron zueinander bewegt werden. Der Synchronlauf der Motoren wird durch zwei zusätzliche Wegmesssysteme überwacht. Typ und Ausführung der Systeme wird noch genauer bestimmt. Die Ansteuerung der Regalböden wird über 16 opto-elektronische Sensorenpaare erfolgen (Fig. 8), welche auf der Länge des RBG angebaut sind. (Fig. 6a). Beim Be- und Entladen der Regale wird das RBG über die Motorbremsen der Getriebemotoren gehalten. Am Anfang und am Ende des Hubweges müssen zwei Endschalter (1 x Softwareschalter, 1 x Hardwareschalter) je Säule angebracht werden (Fig. 13). Die Seile werden mit einer elektronischen Überwachungseinheit kontrolliert. Hersteller und Typ werden noch bekannt gegeben.

### BG 02 Regalbediengerät (RBG)

Das RBG führt die Auf- und Abwärtsbewegungen und das Querfördern beim Aus- und Einlagern in den Regalen aus. Das Querfördern wird durch zwei Kettensysteme übernommen, welche durch jeweils einen Schneckengetriebemotor angetrieben werden. Diese Motoren der Fa. SEW werden über jeweils einen Frequenzumrichter angesteuert.. Zur Kontrolle des Synchronlaufes sind zwei Drehgeber angebaut. Die Position der Transportpalette wird durch vier opto-elektronische Sensoren überwacht. Die Position der Transportpalette auf der RBG muss mit der Längsfördereinheit abgeglichen werden, damit die Fördernocken der Längsfördereinheit bei Aufnahme der Palette an der richtigen Stelle positioniert sind. Die Position der Fördernocken beider Einheiten (Fig. 9) werden per Sensor abgefragt. Die Förderung der Palette geschieht über nicht angetriebene Rollenbahnen. Um ein unbeabsichtigtes Verschieben der Palette zu verhindern, ist die Arretierung der Palette über Fördernocken und Motorbremse erforderlich. Am RBG werden an jeder Längsseite drei Abstützungen angebracht, welche mit einem E- Motor angetrieben werden. Alle Antriebe haben eine Positionsabfrage durch Initiatoren.

### BG 03 Transportpalette

Die Transportpalette (Fig. 10) ist eine flache Blechpalette die auf Rollen steht, welche in Längsrichtung angebaut sind. Sie enthält keine elektrischen oder elektronischen Bauteile. Jedoch wird die Ladung der Palette über zwei Lichtschranken auf ihre Außenmaße überprüft, bevor die Palette in das Regal eingefahren wird.

### BG 04 Mittelfach, BG 05 Oberfach und BG 06 Unterfach

Die Regalfächer haben die Aufgabe, die Transportpalette und das Transportgut aufzunehmen. Am Eingang eines jeden Faches sind am Anfang und am Ende jeweils ein Paar opto-elektronische Sensoren, welche die genaue Endlage der Transportpalette im Regal abfragen. Außerdem verhindern zwei elektromagnetische Verrastungen je Fach ein Herausgleiten der Transportpalette aus den Regalfächern.

### BG 07 Längsfördereinheit

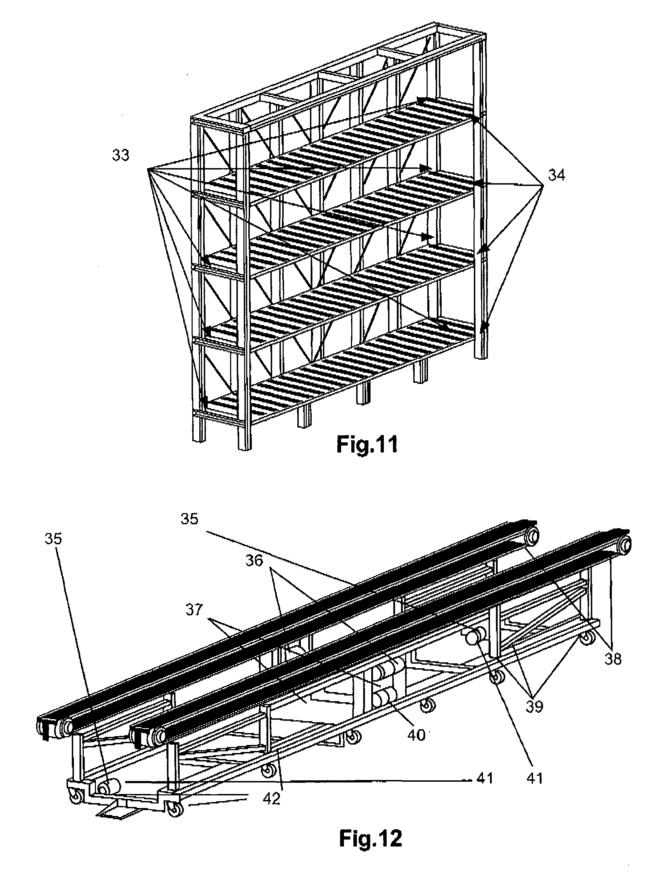

Die Längsfördereinheit transportiert die Transportpalette in den Lift bzw. aus den Lift heraus. Außerdem richtet sie die Palette zum LKW aus. Für diese Aufgaben sind mehrere Motoren und Sensoren (Fig. 12) im Einsatz. Für den Förderweg 2 sind zwei Kettensysteme verantwortlich, welche durch jeweils einen Antriebsmotor mit Drehwinkelgeber bewegt werden. Diese Antriebsmotoren sind Kegelradgetriebemotoren der Fa. SEW mit 5,5 kW Leistung, welche im Synchronlauf betrieben werden müssen und. Für den Förderweg 1 (max. 2,3m) stehen ebenfalls zwei Antriebsmotoren zur Verfügung. Diese Motoren sind Kegelradgetriebemotoren der Fa. SEW und haben eine Leistung von 1,1 kW. Diese beiden Motoren müssen ebenfalls im Synchronbetrieb laufen. Alle vier Motoren sind mit einem Drehwinkelgeber ausgestattet, um die Position der Einheiten steuern zu können. Des Weiteren sind noch zwei Querverfahrantriebe vorhanden, welche aus zwei Spindelhubgetrieben mit Drehstrommotor bestehen. Diese Drehstrommotoren haben eine Leistung von 1,5 kW mit 1400 min⁻¹. Die Querfahrantriebe müssen getrennt voneinander steuerbar sein, um die Längsfördereinheit zum LKW auszurichten. Die Ansteuerung aller dieser Motoren erfolgt über Frequenzumrichter. Der Förderweg 1 und der Querfahrantrieb müssen durch Software- und Hardwareendschalter gesichert werden.

Die Daten zur Einstellung der Querfahrantriebe werden über das Entfernungsmesssystem der Fa. Sick ermittelt. Die Messpunkte sind wie in Fig. 6a angeordnet und vermessen senkrecht zum LKW.

### BG 08 Einhausung

Die Einhausung schließt das ganze Logistiksystem ein und schottet das Logistiksystem gegen Umwelteinflüsse ab. Außerdem muss eine gleichmäßige Temperatur zwischen 10° - 30° C innerhalb der Einhausung herrschen. Zur Ein- und Auslagerung sind bis zu zwei Öffnungen in den Außenwänden vorhanden. Diese Öffnungen werden durch Rolltore verschlossen, welche eine Abfragemöglichkeit über Sensoren haben. Die Rolltore werden über die Steuerung und ebenfalls manuell zu bedienen sein. An der Einhausung werden zwei Bedientableaus angebracht, für die einzelnen Funktionen des Logistiksystems. Sick-Entfernungssysteme, für die Vermessung des LKWs, werden vor der Einhausung montiert (Fig. 14). Die Arbeitsbereiche vor den Ein- und Ausgängen werden durch Laserscanner vor unberechtigten Zutritt überwacht (schraffierte Flächen Bild). Der Laserscannertyp wird noch genauer bestimmt.

### Bereitstellen der Palette

Soll eine Palette beladen werden, wird über das Bedientableau eine Palette angefordert. Die Steuerung sucht im Logistiksystem eine leere Palette und gibt dem RBG die Daten des betreffenden Regalfaches. Das RBG fährt auf Höhe des entsprechenden Regalfaches und nimmt die leere Palette auf. Dann setzt die RBG die Palette auf die Längsfördereinheit ab und fährt in ihre tiefste Position unterhalb der Längsfördereinheit. Die Längsfördereinheit fördert die Palette außerhalb des Logistiksystems zum Beladen.

### Ablauf des Längsförderns:

a) Ausfahren des Förderweges 1 (max. 2,3 m) bis zum Kontakt des Sensors.
b) Abschieben der Palette mit dem Kettensystem, Steuerung mittels Drehwinkelgeber
c) Das Kettensystem fördert die Palette bis ca. 500mm vor der Endposition, die letzten 500mm werden mit einem Förderhaken überwunden
d) Zurückfahren des Förderweges 1 um ca. 500 mm und manuelles Einsetzen des Förderhakens.
e) Startknopf drücken
f) Vorfahren des Förderweges 1 bis zur Endposition der Palette
g) Manuelles Aushaken des Förderhakens
h) Startknopf drücken
i) Rückfahrt des Förderweges 1 der Längsfördereinheit in die Grundposition
j) Beladen der abgestellten Palette.

Die Positionen a) bis i) werden durch einen Laserscanner überwacht. Betritt jemand die überwachte Fläche, wird der Transportvorgang sofort gestoppt. Der Vorgang kann wieder aufgenommen werden, wenn die überwachte Fläche wieder frei ist und der Fahrer erneut den Startknopf drückt. Das Betreten der gescannten Fläche ist bei den Punkten d) und g) gewollt.

### Einlagern der beladenen Palette:

a) Ausfahren des Förderweges 1 bis zum Kontakt des Sensors
b) Manuelles Einhaken des Förderhakens
c) Startknopf drücken
d) Zurückfahren des Förderweges 1 um ca. 500 mm und manuelles Aushaken des Förderhakens
e) Startknopf drücken
f) Ziehen der Palette mit dem Kettensystem, Steuerung mittels Drehwinkelgeber
g) hat die Palette die Grundposition auf dem Längsfördersystem erreicht, fährt die obere Einheit wieder bis zur Grundposition zurück (Kontrolle der Mittenstellung)
h) die RBG nimmt die beladene Palette und fördert sie in einen freien Regalplatz.

Das Betreten der gescannten Fläche bei den Punkten b) und d) ist gewollt.

### Positionieren des LKWs:

Der LKW wird rückwärts an das Logistiksystem an einen Anschlag gefahren. Anschließend erfolgt die Vermessung der Parkposition des LKWs durch die Entfernungsmessgeräte der Fa. Sick. Ist die Parkposition des LKWs zum Logistiksystem nicht in Ordnung, leuchtet ein großes rotes Ampelsignal. Der Fahrer muss den LKW besser positionieren. Ist die Position in Ordnung, leuchtet ein großes grünes Ampelsignal und das Heck des Aufliegers wird automatisch durch zwei 2 Hydraulikzylinder in der Höhe fixiert.

### Einfahren der Transportpalette

Der Fahrer steigt aus dem LKW und überzeugt sich durch eine Sichtprüfung, dass es keine Störquellen im LKW, Auflieger und in der Bearbeitungszone gibt. Ist die Ladezone frei, übernimmt ein Laserscanner die Überwachung der Ladezone. Der Fahrer geht zum Bedientableau, um die Beladung des LKWs zu starten.
a) Eingabe der Lagerfachnummer
b) Startknopf betätigen
c) Die RBG fährt zum Lagerplatz der gewünschten Palette und fördert sie auf das RBG.
d) Das RBG setzt dann die Palette auf die Längsfördereinheit ab.
e) Das RBG fährt anschließend in eine Warteposition unterhalb der Längsfördereinheit.
f) Die Längsfördereinheit stellt sich jetzt fluchtend zum LKW, anhand der vom Entfernungsmesssystem ermittelten Werte.
g) Ausfahren des Förderweges 1 (max. 2,3 m) bis zum Kontakt des Sensors mit dem LKW.
h) Aufschieben der Palette in den LKW mit dem Förderweg 2, Steuerung mittels Drehwinkelgeber
i) Der Förderweg 2 fördert die Palette bis ca. 500mm vor der Endposition, die letzten 500mm werden mit einem Förderhaken überwunden.
j) Zurückfahren des Förderweges 1 um ca. 500 mm und manuelles Einsetzen des Förderhakens.
k) Startknopf betätigen
l) Vorfahren des Förderweges 1 bis zur Endposition der Palette
m) Manuelles Aushaken des Förderhakens
n) Startknopf betätigen
o) Rückfahrt des Förderweges 1 in die Grundposition innerhalb des Regals
p) Die Längsfördereinheit stellt sich wieder in 0° Stellung
q) Das RBG fährt in Grundposition
r) Der automatische Höhenausgleich fährt ein.

Während des gesamten Fördervorganges sind die Laserscanner zum Sichern des Arbeitsbereiches aktiv. Das Betreten der gescannten Fläche bei den Punkten j) und m) ist gewollt.

### Positionieren des LKWs:

Der LKW wird rückwärts an das Logistiksystem an einen Anschlag gefahren. Anschließend erfolgt die Vermessung der Parkposition des LKWs durch die Entfernungsmessgeräte der Fa. Sick. Ist die Parkposition des LKWs zum Logistiksystem nicht in Ordnung, leuchtet ein großes rotes Ampelsignal. Der Fahrer muss den LKW besser positionieren. Ist die Position in Ordnung, leuchtet ein großes grünes Ampelsignal und das Heck des Aufliegers wird automatisch durch zwei Hydraulikzylinder in der Höhe fixiert.

Soweit in der vorliegenden Anmeldung von Plattformen oder Paletten die Rede ist, so handelt es sich hierbei wie offenbart um Ladungsträger.

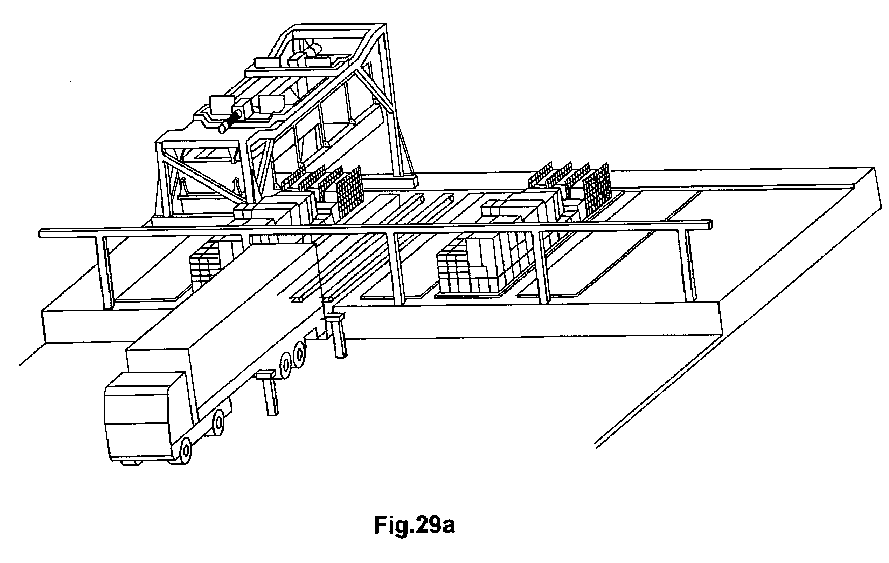

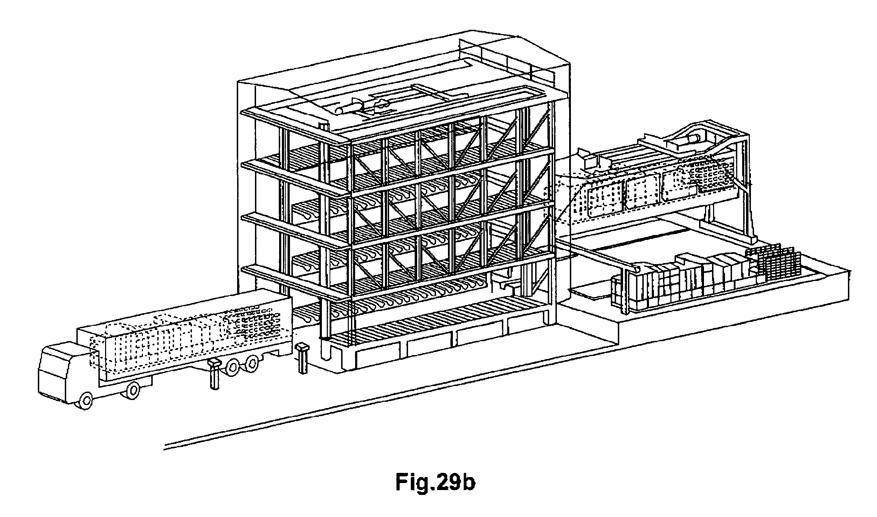

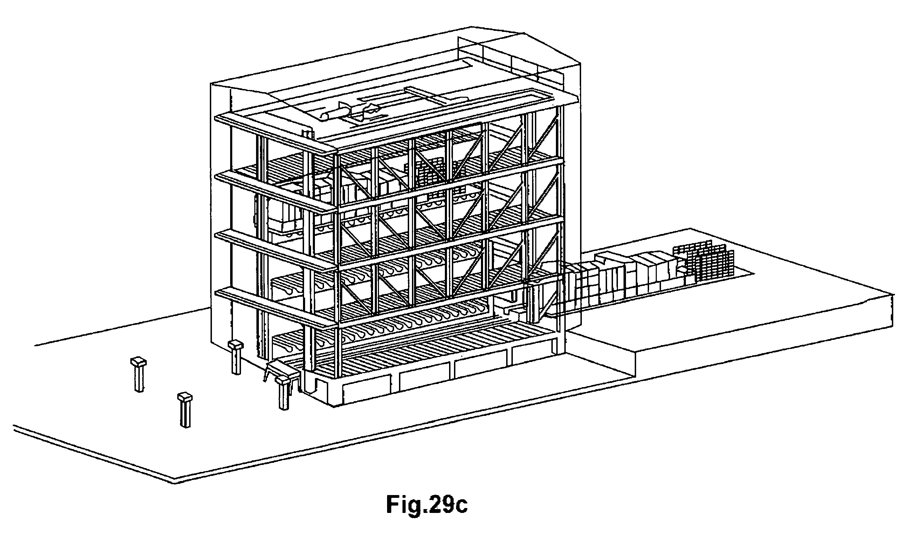

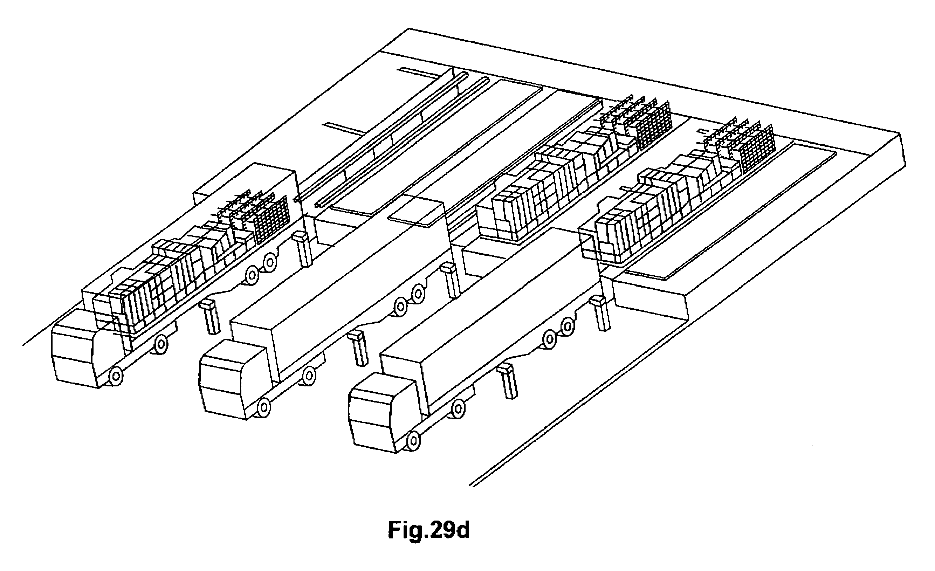

Figur 29a zeigt einen Kommissionierungsbereich mit einem erfindungsgemäßen Portalkran. Figur 29b zeigt den gleichen Kommissionsbereich, jedoch ist dabei dieser Kommissionierungsbereich aus Sicht des LKWs, das Transportfahrzeug, dem Lagerbereich nachgeordnet. Dabei ist zu erkennen, dass beispielsweise 5 Ladungsträger auf einer Ebene parallel zueinander angeordnet sind und diese Ladungsträger werden Artikelweise in der gleichen oder identischen Form vorkommissioniert. Mittels eines verfahrbaren Portalkrans - siehe Figur 29 - können die Ladungsträger und die darauf befindliche Ware zu einer Übergabestation gebracht werden, von der aus dann diese Plattform auf einen LKW transportiert werden kann (wie bereits ausführlich offenbart).

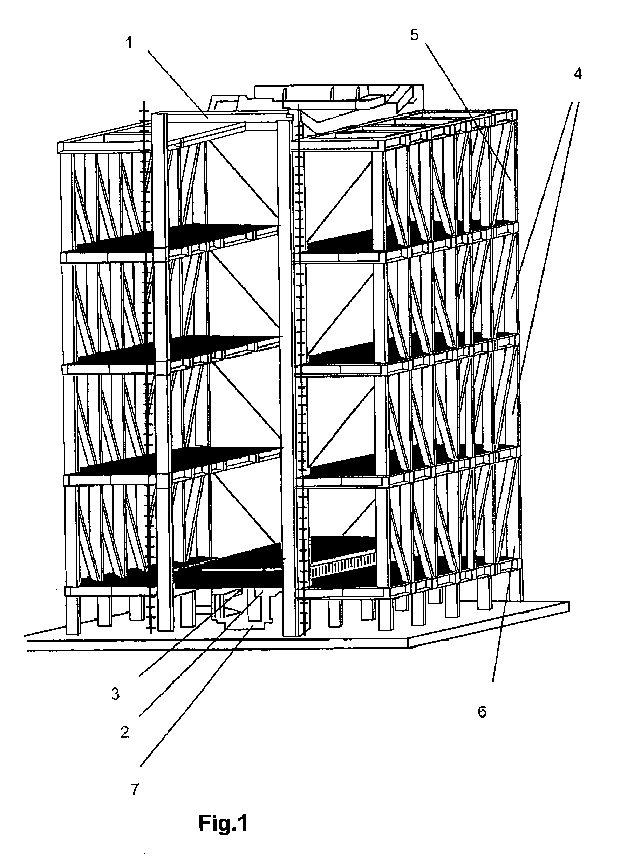

Der verfahrbare Portalkran ist auf Rollen/Schienen gelagert und verfügt vorzugsweise über die gleichen Hebeelemente wie in dem Lagerbereich (siehe z. B. Fig. 1). Wie zu erkennen, weist der Portalkran auch eine Umhüllung auf, die von den Außenabmaßen nur unwesentlich größer ist als die der Ladungsträger, um somit bei Aufnahme eines Ladungsträgers und der dann einsetzenden Transportbedienung (seitlich zum Ladungsträger) ein Verrutschen/Herunterfallen der auf dem Ladungsträger befindlichen Waren zu verhindern. Wenn mittels des Portalkrans ein Ladungsträger aufgegriffen wird, so greifen Greifelemente (Greifelemente unter den Ladungsträger, um ihn sicher zu greifen und nach oben zu ziehen und über der Übergabestation wieder herunter zu lassen.)

Vor der Übernahme des Ladungsträgers durch den Portalkran wird der Portalkran exakt über den Ladungsträger ausgerichtet und es wird auch auf optische oder sonstige Weise gemessen, inwieweit Waren auf dem Ladungsträger über den Ladungsträgerrand überstehen. Ist dies der Fall , so erfolgt eine entsprechende Meldung, damit dieser Zustand beseitigt werden kann. Eine optische Messung des Überstandes über den seitlichen Rand des Ladungsträgers kann z. B. mittels Lasern erfolgen.

Wenn ein Ladungsträger über die Übergabestation abgelassen wird, kann dies auch individualisiert erfolgen, d. h. die Positioniereinrichtung des Portalkrans erhält zuvor Informationen bzw. Messparameter, die die aktuelle Stellung eines an der Übergabestation befindlichen LKWs berücksichtigen. Ist beispielsweise der LKW um 5 cm (oder einen anderen Betrag von etwa 1 bis 50 cm) aus der Idealposition seitenversetzt an die Übergabestation herangefahren, so kann auch der Ladungsträger so herabgelassen werden, dass er dann durch eine reine translatorische Bewegung auf der Übergabestation direkt auf die Ladefläche des LKWs transportiert werden kann. Wenn also entsprechende Positionierinformationen des LKWs an die Steuerung des Portalkrans übergeben werden, so kann der Portalkran den Ladungsträger immer so herablassen, dass der Ladungsträger ohne eine weitere Seitenbewegung oder weitere Ausrichtung der Übergabestation direkt in den LKW transportiert werden kann.

Da Portalkräne allgemein, z. B. Container, Verlade-/Ladestationen u. dgl. bekannt sind, wird an dieser Stelle auf die weitere Schilderung der Details zum Antrieb, Lagerung der Portalkräne verzichtet, denn so etwas ist bekannt.

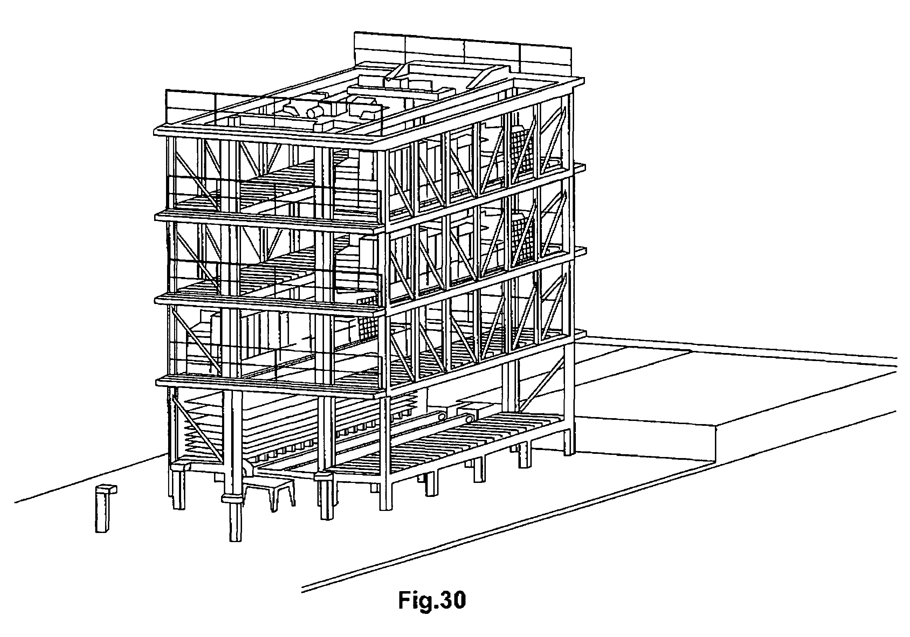

In einer weiteren **Figur 30** ist zu erkennen, dass der Lagerbereich eines Logistiksystems nicht Teil der Erfindung auch so ausgebildet ist, dass im unteren Bereich ein Ladungsträgerspeicher angeordnet ist, mit dem der jeweils mehrere Ladungsträger übereinander aufnehmen kann, damit solche Ladungsträger stets in ausreichender Zahl vorhanden sind. Jedweder Ladungsträger ist durch Hebesystem des Speicherbereichs individuell aus dem Ladungsträgerspeicher herausnehmbar und in ihn hineinstellbar.

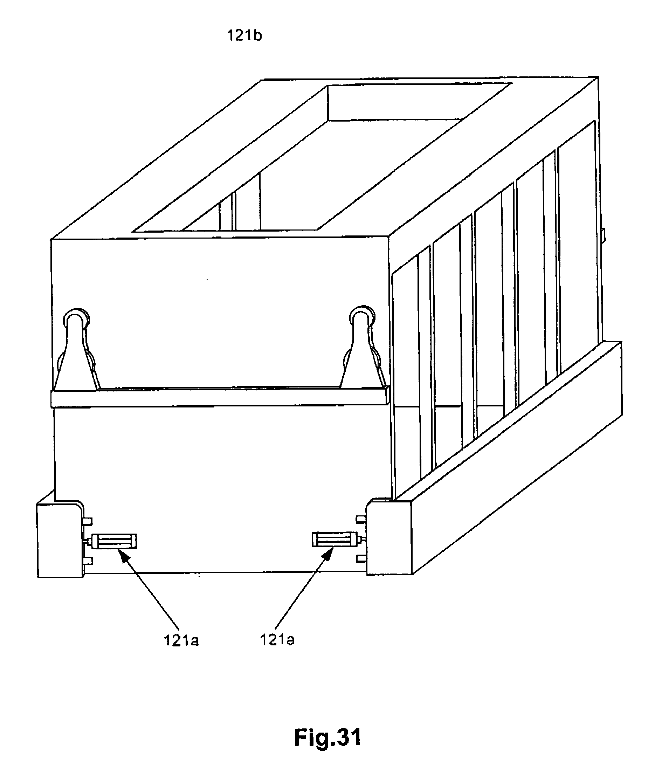

**Figur 31** zeigt eine perspektivische Ansicht eines Portkalkrans, der nicht Teil der Erfindung ist. Der Portalkran ist insbesondere mit verschiebbaren Verrastschienen gezeigt. Im vorderen Bereich des Portalkrans sind ein Antrieb sowie die Führungsschienen für die Verrastungsschienen gezeigt.

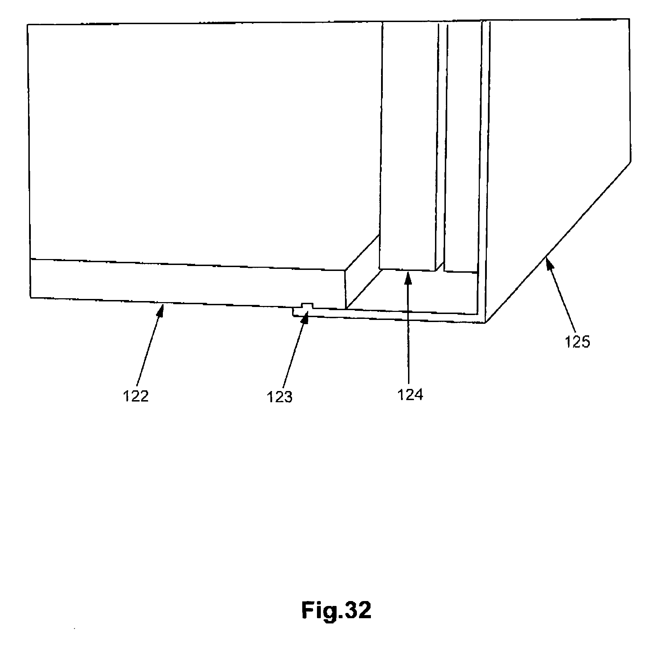

**Figur 32** zeigt eine vergrößerte Teilansicht des Portalkrans von Figur 31. Hierbei sind insbesondere die Verrastungsschienen für die Ladungsträger (vorzugsweise mit einer Rastnase), der Ladungsträger und die Ladungsträgeraufnahme gezeigt.

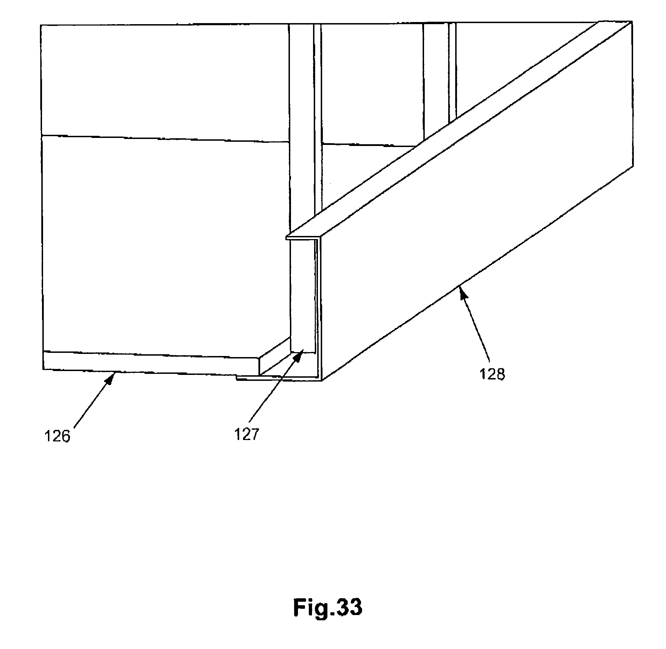

**Figur 33** zeigt eine weitere Teilansicht des Portalkrans von Figur 31. Hier sind ebenfalls die Verrastungsschienen für Ladungsträger (vorzugsweise ohne Rastnase), eine Ladungsträgeraufnahme sowie ein Ladungsträger gezeigt.

Somit ist in Figur 32 eine Ausführungsform mit einer Rastnase und in Figur 33 eine Ausführungsform ohne Rastnase gezeigt.

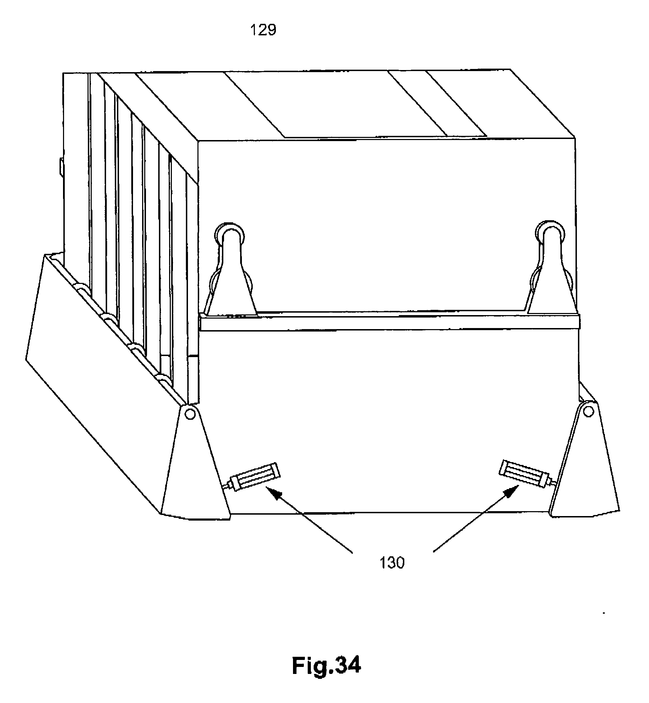

**Figur 34** zeigt eine perspektivische Ansicht eines Portalkrans gemäß einem weiteren Ausführungsbeispiel. Hierbei ist der Portalkran mit verschwenkbaren Verrastungsklappen gezeigt. Im vorderen Bereich des Portalkrans ist ein Antrieb für die Verrastungsklappe gezeigt.

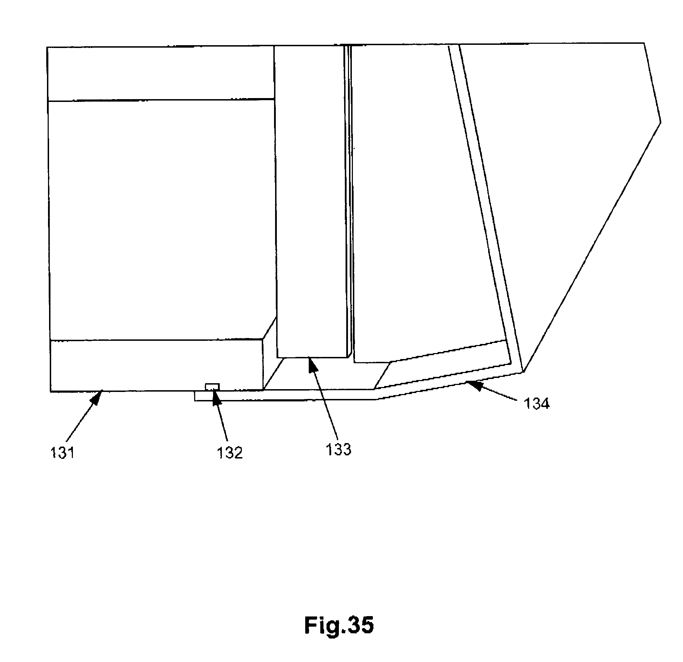

**Figur 35** zeigt eine Teilansicht des Portalkrans von Figur 34. Hierbei sind insbesondere die Verrastungsklappen für die Ladungsträger (vorzugsweise mit einer Rastnase), die Ladungsträgeraufnahme und der Ladungsträger gezeigt.

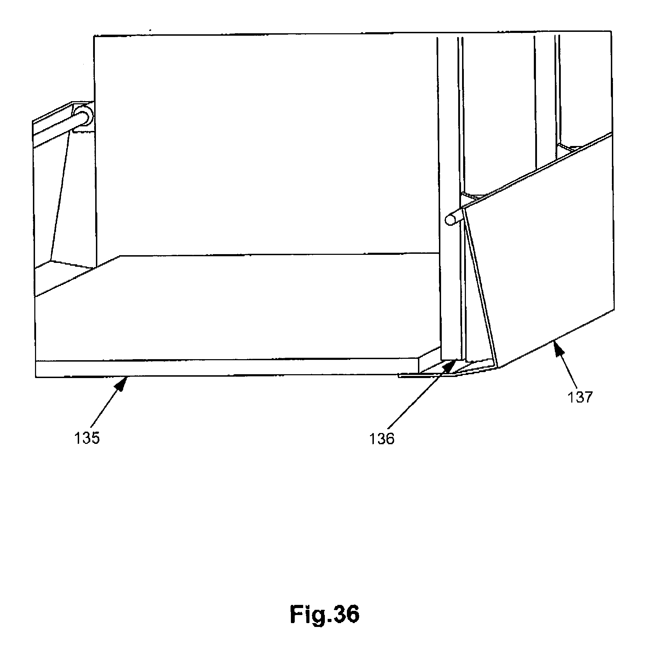

**Figur 36** zeigt eine weitere Teilansicht des Portalkrans von Figur 34. Hierbei sind ebenfalls die Verrastungsklappen (ohne Rastnase), die Ladungsträgeraufnahme und der Ladungsträger gezeigt.

Während in Figur 35 eine Ausführungsform mit einer Rastnase gezeigt ist, wird in Figur 36 eine Ausführungsform ohne Rastnase gezeigt.

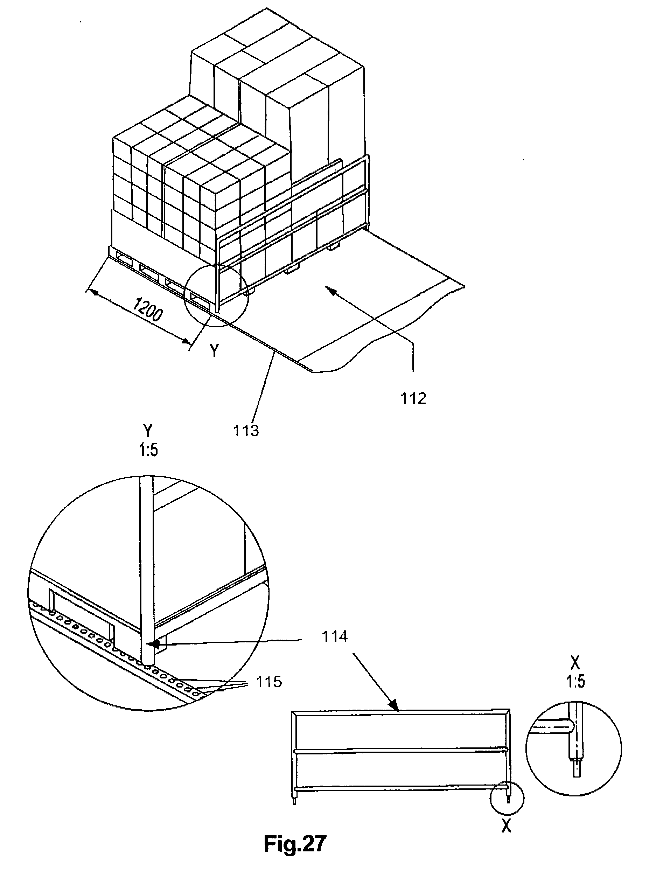

**Figur 27** zeigt eine Darstellung einer Plattform (eines Ladungsträgers), welcher nicht vollständig mit Gütern belegt ist und dort ist auch ein Geländer gezeigt, welches quer zur Längsrichtung der Plattform diese überspannt und somit die dort aufgestellte Ware auf der Plattform gegen Verrutschen schützt.

Derlei Geländer können auch am Rand der Plattform in Längsrichtung aufgestellt werden, was insbesondere dann sinnvoll ist, wenn sich auf dem Ladungsträger Waren befinden, die ohne den Geländerschutz leicht rutschen könnten.

Solche Geländer müssen einerseits während des Transports gut fixiert sein, andererseits müssen sie auch individuell schnell aufstellbar bzw. lösbar sein, um der jeweiligen Ladungsposition zu entsprechen.

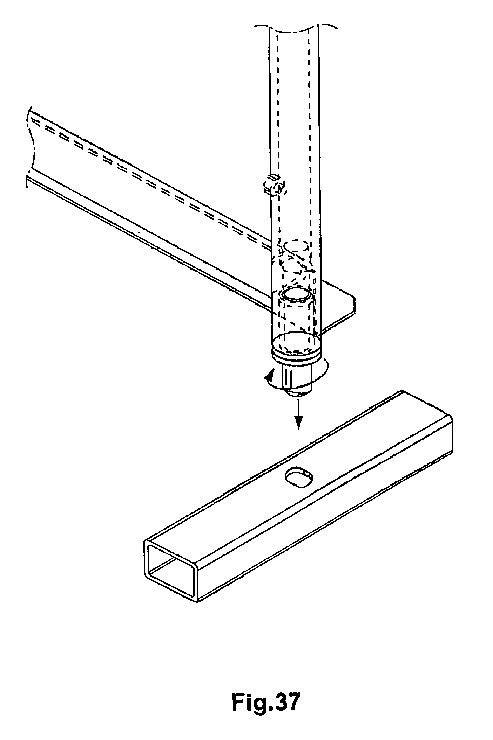

**Figur 37** zeigt nun einen rechteckigen Holm (aus Metall), in dem eine oval verlaufende Öffnung eingelassen ist. Die Geländerunterseite weist einen drehbaren Zapfen mit ebenfalls ovalem Querschnitt auf, welcher in die ovale Öffnung einlassbar ist und wenn der Zapfen ganz anliegt, weist der Zapfen einen von der ovalen Querschnittsform abweichenden, vorzugsweise kreisrundförmigen Abschnitt auf, so dass bei Drehung des Zapfens der ovale Abschnitt des Zapfens innerhalb des Holms liegt und somit das Geländer fest mit dem Holm verbunden ist. Der Holm kann bevorzugt am Rand der Plattform oberseitig befestigt werden oder auch Teil der Plattformumrandung sein.

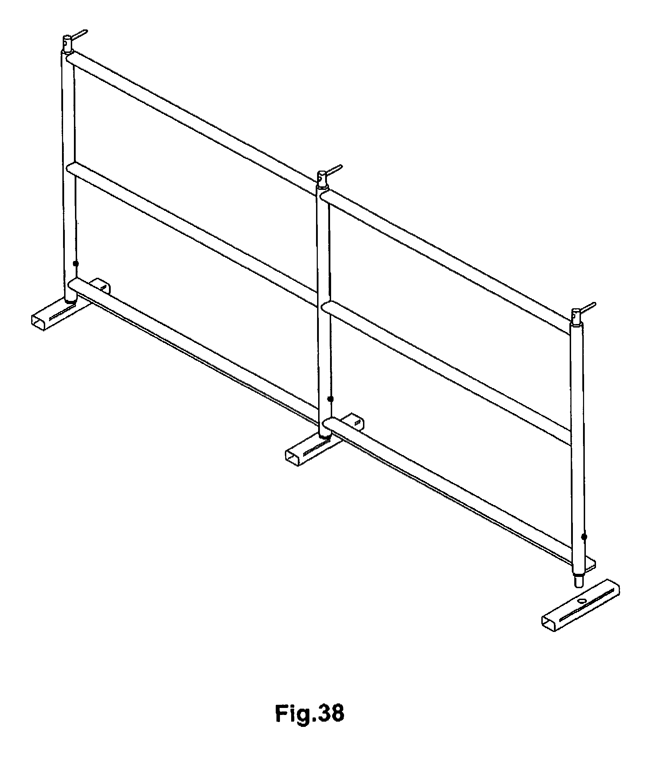

Zur Drehung des Zapfens weist das Geländer vertikale Rohre auf - siehe **Figur 38** -, welche innen hohl sind und in welche ein Drehhebelwerkzeug liegt, welches das Rohr durchsetzt und mittels welchem der Zapfen verdrehbar ist. Es ist auch möglich, das Drehhebelwerkzeug nicht fest mit dem Zapfen zu verbinden, sondern das Drehhebelwerkzeug nachträglich einzusetzen und durch eine entsprechende Verschränkung oder andersartige Verbindung von Zapfen und Drehhebelwerkzeug eine Drehbewegung des Zapfens zu ermöglichen.

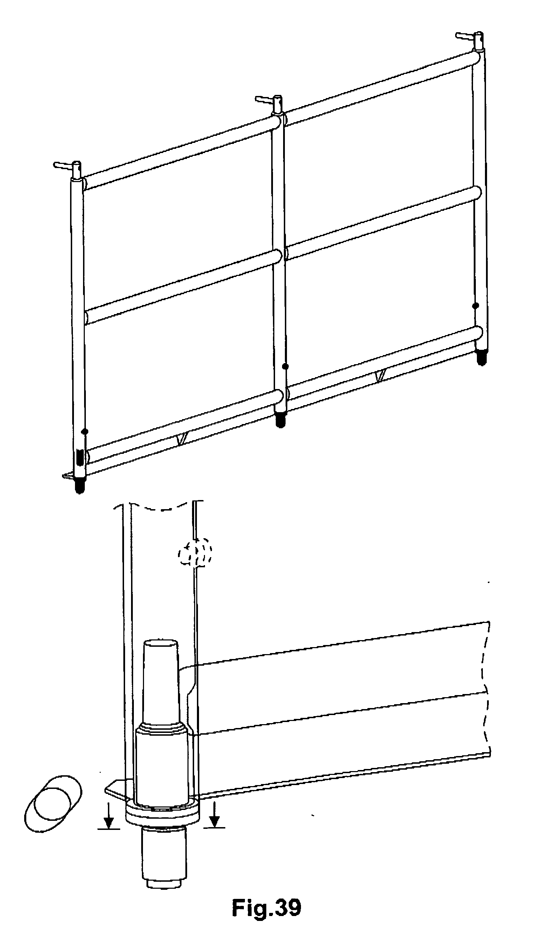

**Figur 39** zeigt die in Figur 37 und 38 gezeigte Anordnung noch einmal in alternativer und ergänzender Form. Dort ist insbesondere auch gut zu erkennen, dass am Geländer unten an dem Bereich der horizontal liegenden Geländerstangen (Holme) noch ein Winkel angebracht ist, welcher insbesondere die Funktion aufweist, dass dann, wenn Ware hierauf gestellt wird, auch das Geländer noch besser in der Aufrechtposition gehalten werden kann.

In der unteren Figur 39 ist auch noch einmal ein Schnitt durch den Drehzapfen in dem Bereich zu erkennen, wo dieser einen nichtovalen Abschnitt aufweist, der innerhalb der ovalen Öffnung des unteren Holms drehbar ist.

Sowohl in der Figur 37 als auch in der Figur 38 und 39 ist an dem vertikalen Geländerholm äußerlich eine Schraube erkennbar. Mit dieser kann das im Holm befindliche Drehwerkzeug und damit auch der gesamte Zapfen fixiert werden, wenn die Schraube in den Holm hineingedreht wird und bevorzugt mit entsprechenden Öffnungen oder Gegenlagern, die am Drehwerkzeug ausgebildet sind, zum Eingriff kommt. Solche Gegenlager sind insbesondere in der Figur 37 gezeigt.

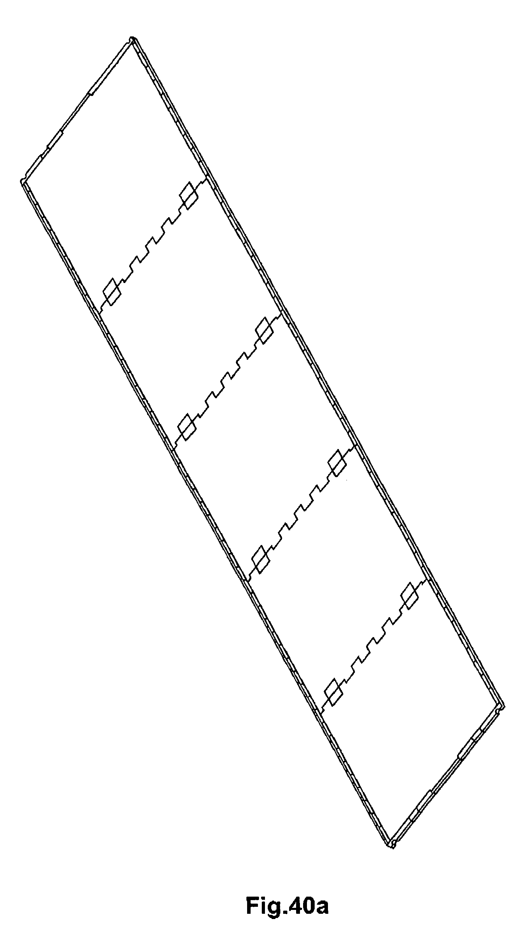

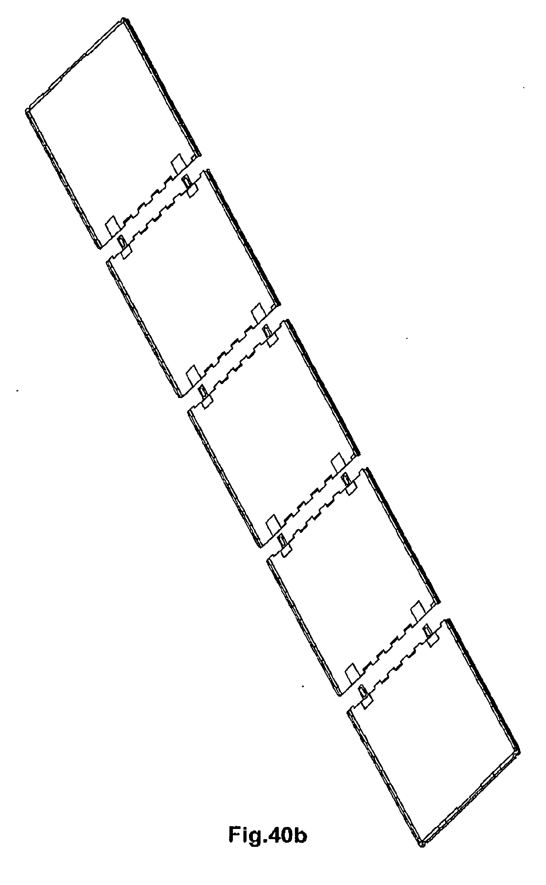

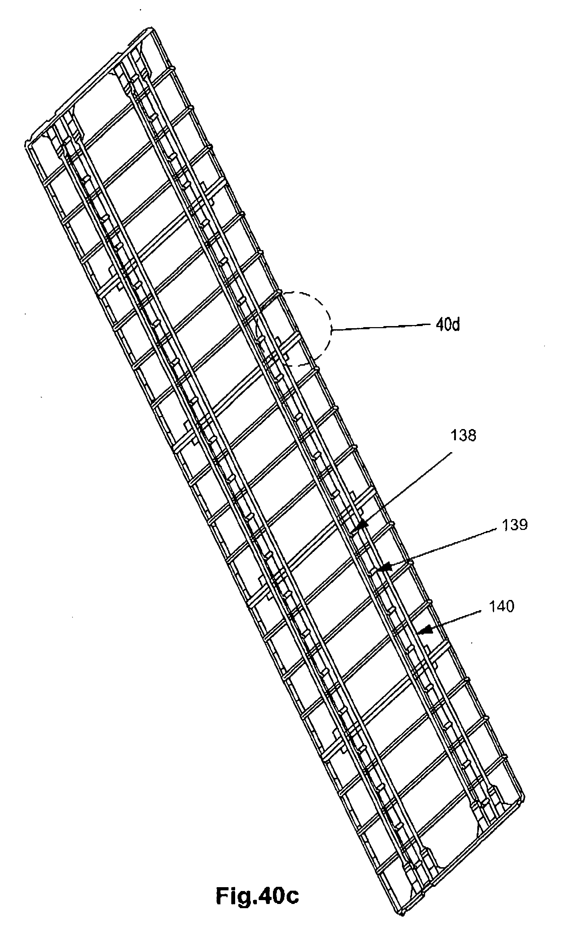

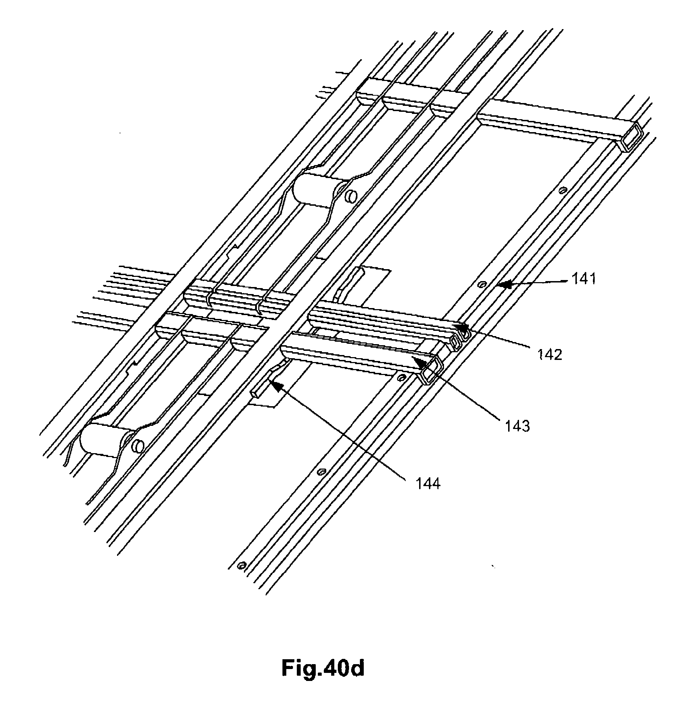

Figur 40 zeigt eine Plattform (Ladungsträger), welche aus mehreren Elementen besteht, in der dargestellten Figur 40a aus fünf Einzelelementen, die zusammensteckbar sind, um somit einen länglichen Ladungsträger (Plattform) zu bilden. Figur 40a zeigt eine Aufsicht auf den Ladungsträger, wobei die Oberseite des Ladungsträgers bevorzugt aus Holzplatten gebildet ist.

Figur 40b zeigt einen in Figur 40a dargestellten Ladungsträger, wobei die Einzelbestandteile des Ladungsträgers, also die einzelnen Elemente, voneinander gelöst sind. Es ist gut zu erkennen, dass die beiden Elemente an den Enden sog. Endstückelemente sind, die auch die entsprechenden Vorrichtungen aufweisen, die mit den Transporteinrichtungen in Eingriff zu bringen sind.

Figur 40c zeigt den in Figur 40a dargestellten Ladungsträger, der aus fünf Elementen zusammengesetzt ist, in der Darstellung jedoch von der Unterseite. Dabei ist zu erkennen, dass jedes einzelne Element auf der Unterseite eine Gerüststruktur aufweist, die bevorzugt aus Metall gebildet ist und auf der Unterseite auch eine Vielzahl von Rollen ausgebildet sind, so dass der gesamte Ladungsträger unterseitig in zwei nebeneinanderliegenden Reihen eine Vielzahl von Rollen aufweist. Eine vergrößerte Ansicht der Unterseite des Ladungsträgers gemäß Figur 40c ist in Figur 40d dargestellt. Dort sind sowohl zwei zylindrische Rollen zu erkennen wie auch die Schnittstelle zwischen zwei Elementen und die Unterseite weist die erwähnte Versteifungsstruktur aus Metall auf, die aus im Wesentlichen im Querschnitt rechteckigen Metallholmen (Rohren) gebildet ist, die an die Platten, die die Oberseite des Ladungsträgers bilden, angeschraubt oder in sonstiger Weise befestigt sind. Auch können die einzelnen Holme untereinander in entsprechender Weise verbunden sein, z. B. verschweißt sein, verklebt sein, verschraubt sein oder dergleichen.

Die Rollen selbst werden von einem im Wesentlichen U-förmig geformten Metallprofil getragen, wobei dieses Profil an die Unterseite des Ladungsträgerelements befestigt ist, z. B. durch Verschrauben, Verkleben oder dergl.

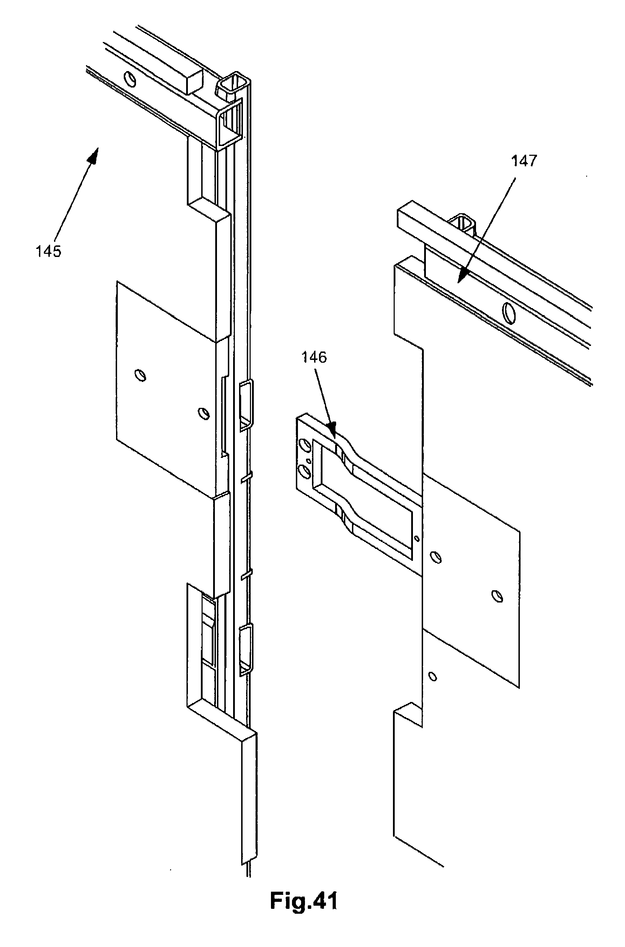

Figur 41 a zeigt in der Obenaufsicht zwei voneinander gelöste Ladungsträgerelemente. Hierbei ist in besonderer Weise das Verbindungselement zu erkennen, welches an einer Seite eines Ladungsträgerelementes befestigt ist und welches in einen Einschub (-fach) des entsprechenden Gegenstücks des anderen Ladungsträgerelementes (im Bild das obere Ladungsträgerelement) einschiebbar ist und dort einrasten kann oder in sonstiger Weise mit dem Ladungsträgerelement fest verbunden werden kann, so dass aber auch noch eine Lösung beider Ladungsträgerelemente voneinander anschließend möglich ist, sei es durch Einsatz eines entsprechenden Werkzeugs oder auch durch Krafteinwirkung, wenn beide Ladungsträger voneinander weggezogen werden. Beide aneinanderliegenden Ladungsträger können aber auch in vielfältiger Weise mittels einer Verriegelungseinrichtung verbunden werden, so dass erst nach Lösen einer Verriegelung die Loslösung beider Ladungsträgerelemente möglich ist. Die Figur zeigt auch, dass die Oberseite, also die Platten der Ladungsträgerelemente, an entgegenliegenden Seiten Aussparungen aufweist, die sich gegenseitig entsprechen, so dass dann, wenn die Ladungsträgerelemente gegenseitig zur Anlage kommen, eine weitestgehend geschlossene Oberfläche gebildet wird (siehe Figur 40a), die keine großen Lücken, Rillen auf der Oberseite des gesamten Ladungsträgers freilässt.

In der Figur 41a ist an der Selte auch oberseitig ein Holm zu erkennen, welcher eine Öffnung aufweist, z. B. eine Öffnung für die Aufnahme eines Geländers (wie bereits beschrieben).

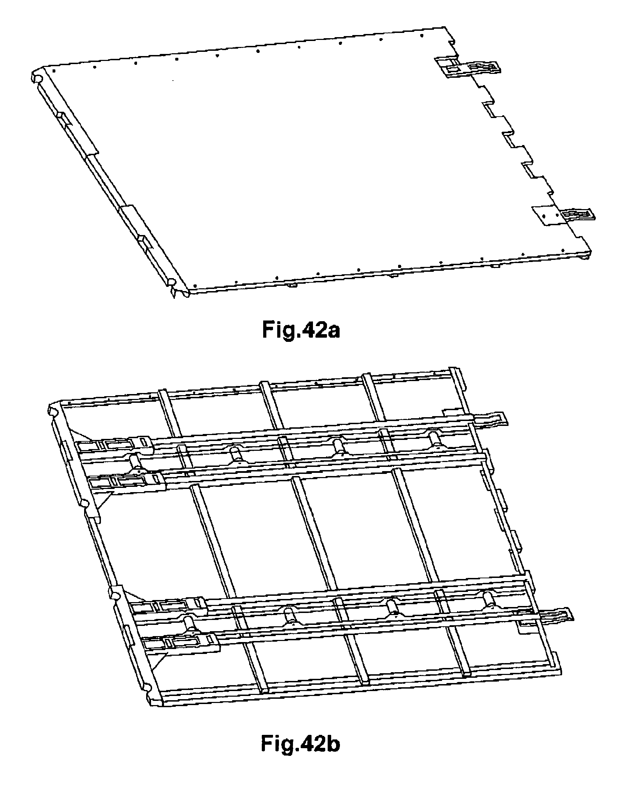

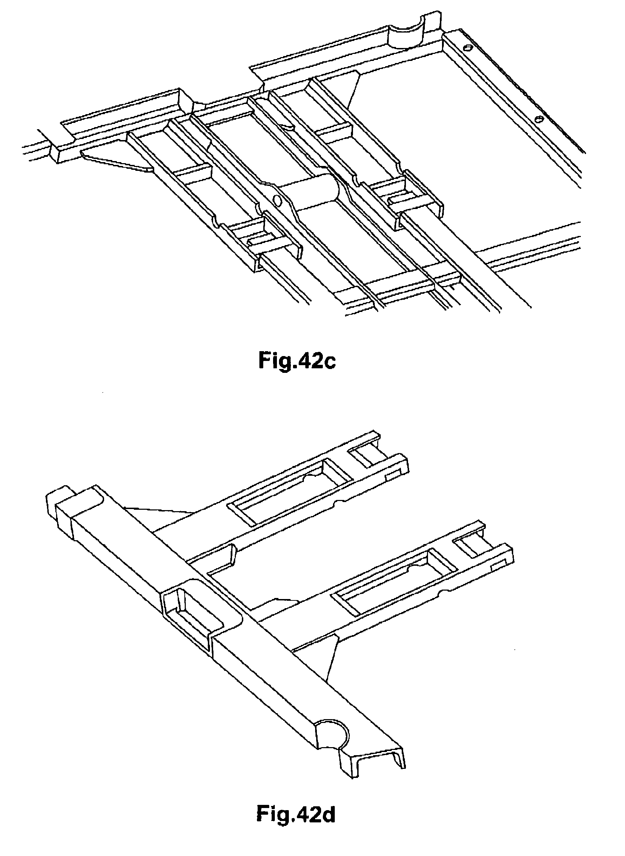

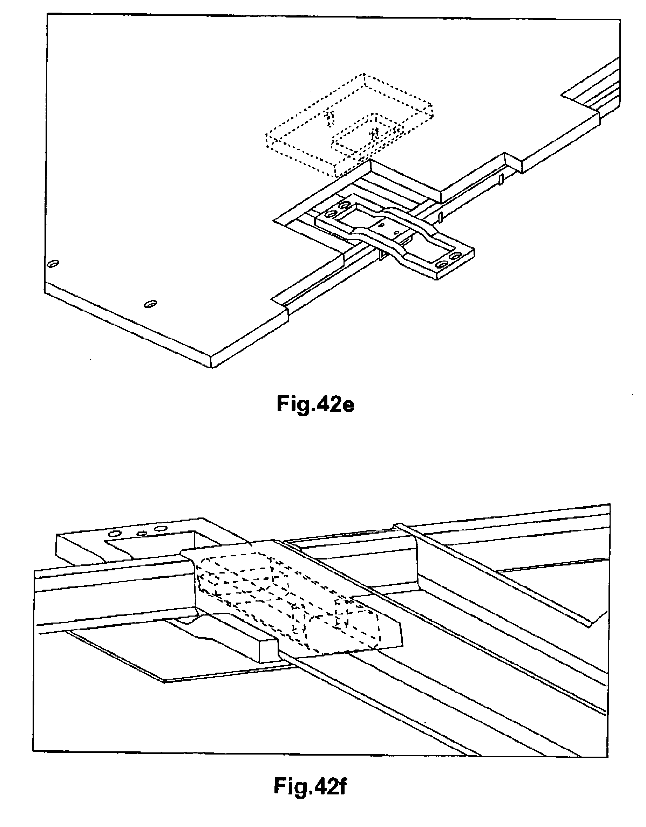

Figur 42 zeigt noch weitere Ansichten eines Ladungsträgerelementes, insbesondere nämlich einer Endsektion. Figur 41a zeigt hierbei die Oberseite einer Endsektion, Figur 42b die Unterseite einer Endsektion, Figur 42c eine vergrößerte Darstellung einer Unterseite einer Endsektion mit einem einzelnen Bauteil aus Metall, welches die entsprechenden Anschlüsse aufweist, damit der gesamte Ladungsträger mit der Transporteinrichtung, die gemäß vorliegender Anmeldung beschrieben ist, zusammenwirken kann und somit eine Platzierung des Ladungsträgers auf der Ladefläche eines Fahrzeugs oder auf einem Ladungsträgerregal oder dergleichen erlaubt.

Die Darstellung selbst ist für den Fachmann aus der Zeichnung verständlich, das gesamte Element wie in Figur 42d dargestellt, ist erfinderisch, aber auch wesentliche Anschlussstücke und Ausbildungen einzelner Anschlüsse bzw. Ausbildungen dieses dort dargestellten Elements.

Figur 42e und f zeigen noch einmal in einer vergrößerten Darstellung die Funktionsweise der Verriegelung zweier aneinanderliegender Ladungsträgerelemente mittels des Verbindungselementes, das bügefförmig ausgebildet ist und das ein oder mehrere Bohrungen aufweist, in die zur Verriegelung Stifte. Schrauben oder andere Verriegelungselemente eingreifen können, um somit bei Zusammenliegen beider Ladungsträgerelemente diese auch fest zusammenzuhalten, so dass eine Loslösung beider Ladungsträgerelemente auch eine Entriegelung voraussetzt, wobei dann, wenn die Stifte durch Federkraft in die Öffnung des Verbindungsbügels (siehe Figur 42e) hineinragen, auch durch die Kraft eine die Federwirkung aufhebende Kraft sich einstellen kann, so dass dann die beiden Ladungsträger auch in dieser Weise gelöst werden können.

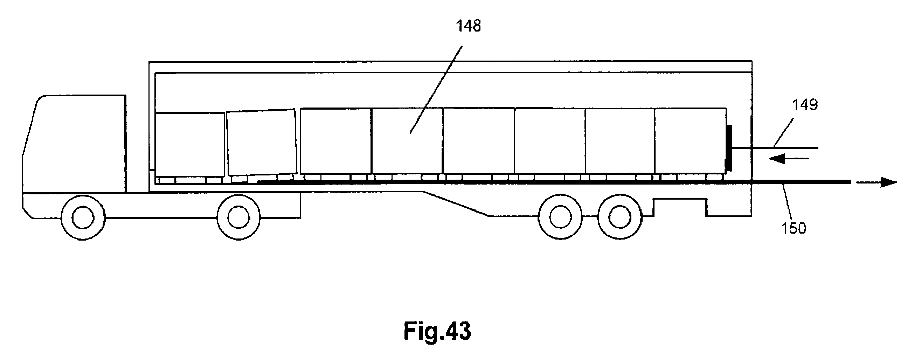

In der Figur 43 ist eine weitere Idee gezeigt, die natürlich aber auch in Verbindung mit den vorbeschriebenen erfinderischen Aspekten zum Einsatz kommen kann.

In der Zeichnung der Figur 43 ist zu erkennen, dass die Plattform (also der Ladungsträger), der bekanntlich unterseits Rollen aufweist, unter den Gütern, mit denen die Plattform beladen ist, "weggezogen" wird, wobei ein Stempel oder ein entsprechendes Gegenlager ausgebildet ist, welches eine Kraft ausübt, was es den Gütern nicht erlaubt, mit der Plattform die Ladefläche des LKWs zu verlassen.

Es hat sich nun herausgestellt, dass es durchaus möglich ist, den Ladungsträger unter der Ladung wegzuziehen, was insbesondere dann der Fall ist, wenn die Ladung aus nicht leicht zerbrechlichen Teilen besteht. Die dargestellte Variante hat den besonderen Vorteil, dann auch Lastkraftwagen zu verladen, die nicht mit dem Ladungsträger wiederkommen, was insbesondere im Export- und Speditionsbereich der Fall ist, so dass insgesamt die Beladungszeit verkürzt werden kann, aber der Ladungsträger nicht vom LKW mitgenommen wird.

Durch ein solches vorbeschriebenes Verfahren kann der Ladungsträger also auch dazu verwendet werden, die Beladung des LKWs drastisch zu verkürzen, ohne dass irgendwelche Änderungen am LKW vorzunehmen sind. Der in der Figur dargestellte Stempel oder das entsprechende Gegenlager kann verschiedentlich ausgeführt werden, so kann es beispielsweise auch schon ausreichen, dass mittels eines Hebels hinreichende Kraft auf die Paletten, aus denen die Ladung regelmäßig besteht, ausgeübt wird, so dass also gar nicht direkt an der Ladung selbst die Gegenkraft angreift, sondern nur an den (vorzugsweise Holz- oder Kunststoff-) Paletten, so dass beim Wegziehen der Plattform die Paletten und damit die gesamte Ladung nach und nach zur direkten Auflage auf der LKW-Ladefläche kommt.

Das Wegziehen der Plattform kann mit den Werkzeugen geschehen, die in der vorliegenden Anmeldung bereits beschrieben worden sind und die auch regelmäßig dazu eingesetzt werden, den Ladungsträger auf die LKW-Ladefläche zu schieben bzw. hiervon wegzuziehen.

### Bezugszeichenliste

- 1: Baugruppe 01Z Hubeinheit
- 2: Baugruppe 02Z Regalbediengerät
- 3: Baugruppe 03Z Transportpalette
- 4: Baugruppe 04Z Mittelfach
- 5: Baugruppe 05Z Oberfach
- 6: Baugruppe 06Z Unterfach
- 7: Baugruppe 07Z Längsfördereinheit
- 8: LKW Beladeplatz
- 9: LKW
- 10: Bereitstellungsplatz Transportpalette
- 11: Bereitstellungsplatz Transportpalette
- 12: Bereitstellungsplatz Transportpalette
- 13: vertikal Fördern
- 14: Rot leuchtet: Endanschlag erreicht, LKW Hubeinheit ist ausgefahren, seitliche Ausrichtung ist i.O.
- 15: Gelb leuchtet: Endanschlag ist fast erreicht, mit langsamer Geschwindigkeit weiterfahren
- 16: Grün leuchtet: Anlage bereit, LKW Hubeinheit ist eingefahren
- 17: Rot blinkt: Fehler
- 18: Lichtzeichen zeigen das Ergebnis der hinteren LKW Messeinheiten
- 19: Lichtzeichen zeigen das Ergebnis der vorderen LKW Messeinheiten
- 20: Rot leuchtet vor Anfahr LKW: Anlage nicht bereit
- 21: Transportpalette
- 22: Längsfördereinheit
- 23: Förderweg 1
- 24: Förderweg 2
- 25: Rückfahrt Förderweg 1
- 26: Grundstellung
- 27: Rollbahnen für Querförderung
- 28: Opto-elektronische Sensoren
- 29: Drehgeber für Synchronlauf
- 30: Abstützungen mit INI Abfrage
- 31: Opto-elektronische Funktionen
- 32: Transportnocken für Querförderung, Position wird über Sensor abgefragt
- 33: elektromagnetische Verrastung
- 34: Opto-elektronische Sensoren
- 35: Querfahrantrieb 1,5 kW
- 36: Antrieb Förderweg2 5,5 kW
- 37: Antrieb Förderweg1 1,1 kW
- 38: Drehgeber Förderweg2
- 39: Endschalter
- 40: Initiator Mittenstellung Förderweg1
- 41: Initiator Mittenstellung Querfahrantrieb
- 42: Endschalter
- 43: Endschalter
- 44: Energiezuführung mittels Energiekette
- 45: Position Entfernungsmesssystem
- 46: LKW
- 47: Stift zum Auslösen
- 48: Förderweg1
- 49: Hacker
- 50: Verriegelung
- 51: Verriegelung rastet in Seitenschiene ein
- 52: Ladefläche
- 53: Plattform
- 54a: Betätigungsschlitten
- 54b: Haken
- 55: Förderweg1
- 56: Förderweg1
- 57: LKW-Ladefläche
- 58: Plattform (Palette)
- 59: Haken, abgesenkt
- 60: Abstandssensor 01D100
- 61: Mitnehmer
- 62: Förderweg2
- 63: Mitnehmer
- 64: Antrieb Förderweg2
- 65: EI. Kupplung
- 66: Haken
- 67: Öse
- 68: Betätigungsschittten für Tasche mit Haken
- 69: Verriegelung
- 70: Palette (Plattform)
- 71: Plattform
- 72: Riegel
- 73: Querförderer
- 74: Längsförderer und Verriegelung automatisch
- 75: Befestigungslaschen für Ladung
- 76: Längsförderer
- 77: Rutschhemmender Belag mit Hubwagen, Elektrowagen, Gabelstapler, Rollwagen befahrbar
- 78: LKW
- 79: seitliche Führungsrollen
- 80: Hubeinheit
- 81: Regalfach oben
- 82: Regalfach Mitte
- 83: Regalfach unten
- 84: LKW
- 85: Kommissionierung
- 86: Regalbediengerät
- 87: Längsfördereinheit
- 88: Übergabetisch
- 89: LKW Unterstützung
- 90: Variante A, manuelle Versiegelung mit beidseitigem über einem auszuklappenden Hebel betätigtes Schiebersystem. Ausführung der Palette siehe 021-1263-03Z Patent
- 91: Betätigungshebel ausklappen
- 92: Palette manuell verriegeln bzw. entriegeln
- 93: Variante B, manuelle Verriegelung mit beidseitigem über einen aussetzenden Hebel betätigtes Schiebersystem. Ausführung der Palette siehe 021-1283-03Z Patent
- 94: Palette manuell verriegeln bzw. entriegeln
- 95: Palette
- 96a: Keil
- 96b: Keil
- 97: Hebel
- 98: Palette
- 99: Hebel
- 100: Palette
- 101: Hebel
- 102: Schnitt mit Hebel, Ladesicherung hintenlVariante
- 103: Längsförderketten Zugkraft 4600N
- 104: Lauffläche Palettenrollen max. Belastung je 140 kN
- 105: Motor zur Ausrichtung der Längsfördereinheit an der Parkposition
- 106: Rollen zur Ausrichtung der Längsfördereinheit an der Parkposition des LKW
- 107: Motor zur Ausrichtung der Längsfördereinheit an der Parkposition des LKW
- 108: Palettenniederhalter
- 109: Haken zum Einschieben der Palette in bzw. aus dem LKW Zug-/ Druckkraft 4500 N
- 110: Höhenausgleich in Verbindung mit der LKW Unterstützung zur Ladefläche des LKWs
- 111: Freiraum für Ladebordwand LKW
- 112: F = ohne Rutschhemmender Belag 672 daN, F = mit Rutschhemmender Belag 224 daN
- 113: Palette mit Ladeeinheiten
- 114: Geländer
- 115: Bohrungen
- 116: Plattform
- 117: Rollen
- 118: Längsförderer
- 119: Querförderer
- 120: Tasche
- 121a: Antrieb und Führungsschienen für die Verrastungsschienen
- 121 b: Portalkran mit verschiebbaren Verrastungen
- 122: Ladungsträger
- 123: Rastnase
- 124: Ladungsträgeraufnahme
- 125: Verrastungsschienen für Ladungstäger (mit Rastnase)
- 126: Ladungsträger
- 127: Ladungsträgeraufnahme
- 128: Verrastungsschienen für Ladungsträger (ohne Rastnase)
- 129: Portalkran mit schwenkbaren Verrastungsklappen
- 130: Antrieb für Verrastungsklappe
- 131: Ladungsträger
- 132: Rastnase
- 133: Ladungsträgeraufnahme
- 134: Verrastungsklappen für Ladungsträger (mit Rastnase)
- 135: Ladungsträger
- 136: Ladungsträgeraufnahme
- 137: Verrastungsklappen für Ladungsträger (ohne Rastnase)
- 138: Rolle
- 139: Rolle
- 140: Gerüst
- 141: Holm
- 142: Holm
- 143: Holm
- 144: Verbindungselement
- 145: Ladungsträgerelement
- 146: Verbindungselement
- 147: Holm für Geländer
- 148: Ladung
- 149: Stempel
- 150: Plattform

## Patentansprüche

1. Logistiksystem zur Übergabe einer Plattform zu einem Fahrzeug und/oder zur Übernahme dieser Plattform von dem Fahrzeug,
wobei das Logistiksystem ferner eine Übergabestation für die Plattform aufweist, und ferner ein Stellbereich für die Plattform vorgesehen ist, wobei dieser Stellbereich eine Lagerfläche für die Plattform ist und/oder auch zur Kommissionierung von Waren/Güter auf der Plattform dient, wobei auf der Plattform die aufzustellenden Waren bevorzugt auf Paletten (Europaletten) angeordnet sind,
wobei die Übergabestation eine Aufnahme aufweist, auf der die Plattform zur Anlage kommt und von der die Plattform zum Fahrzeug und/oder zum Stellbereich förderbar ist, wobei eine erste Ausrichteinrichtung ausgebildet ist, mittels der die Höhe der Aufnahme auf die Höhe der Ladefläche des Fahrzeugs anpassbar ist, dass eine zweite Ausrichteinrichtung ausgebildet ist, mittels der die Aufnahme hinsichtlich Seiten- und/oder Winkellage auf die Ladefläche des Fahrzeugs ausrichtbar ist, so dass durch eine im Wesentlichen geradlinig ausgerichtete Förderung die Plattform von der Aufnahme auf die Ladefläche des Fahrzeugs ab förderbar ist und/oder von der Ladefläche weg auf die Aufnahme förderbar ist, wobei die Fördereinrichtung als Teil der Übergabestation ausgebildet ist und die Plattform eine erste Ausnehmung aufweist, in der ein Haken, Nocken, ein Mitnehmer, eine Verrastung o. dgl. der Fördereinrichtung zum Eingriff kommen, um die Plattform in Längsrichtung zu bewegen,
wobei die Plattform Außenabmaße aufweist, die der Ladefläche des Fahrzeugs angepasst sind, **dadurch gekennzeichnet, dass**
an der Plattform seitlich Führungsrollen ausgebildet sind, die mit den seitlichen Wänden der Ladefläche zusammenwirken können.

2. Logistiksystem nach Anspruch 1,
**dadurch gekennzeichnet, dass** die Plattform zwei erste Ausnehmungen aufweist, die mit Haken, Nocken, Verrastungsmittel etc. der Fördereinrichtung in Eingriff gebracht werden können, wobei die erste dieser beiden Ausnehmungen unterhalb der Plattform zur Aufnahme eines Mitnehmers ausgebildet ist und die zweite dieser Ausnehmungen am oberen Rand oberhalb der Plattform ausgebildet ist.

3. Logistiksystem nach einem der vorhergehenden Ansprüche,
**dadurch gekennzeichnet, dass** die Plattform unterseits mit Rollen versehen ist, die eine Bewegung der Plattform in Längsrichtung erlauben.

4. Logistiksystem nach einem der vorhergehenden Ansprüche,
**dadurch gekennzeichnet, dass** die Plattform mit einem rutschhemmenden Belag versehen ist.

5. Logistiksystem nach einem der vorhergehenden Ansprüche,
**dadurch gekennzeichnet, dass** die Flächenlast der Plattform im Bereich von etwa 0,060 bis 0,090, bevorzugt im Bereich von 0,078 MPa liegt.

6. Logistiksystem nach einem der vorhergehenden Ansprüche,
**dadurch gekennzeichnet, dass** die maximale Rollenbelastung der Rollen der Plattform etwa im Bereich von 550 bis 750 kg, bevorzugt etwa im Bereich von 600 bis 620 kg liegt.

7. Logistiksystem nach einem der vorhergehenden Ansprüche,
**dadurch gekennzeichnet, dass** die Plattform oberseits im Wesentlichen geschlossen ausgebildet ist und mit Palettentransporteinrichtungen, z.B. Gabelstaplern, Hubwagen, Rollenwagen o. dgl. befahrbar ist.

8. Logistiksystem nach einem der vorhergehenden Ansprüche,
**dadurch gekennzeichnet, dass** die Plattform an ihrem oberseitigen Rand mit einer Reihe von Ausnehmungen oder Ösen versehen ist, mittels der Geländer oder Fixiereinrichtungen (Seile) usw. aufgenommen werden können.

9. Logistiksystem nach einem der vorhergehenden Ansprüche,
**dadurch gekennzeichnet, dass** die Plattform an ihrem äußeren Rand umlaufend mit einem Material wie z.B. Gummi o. dgl. versehen ist, welches in der Lage ist, Schläge, Stöße u.dgl. abzufedern bzw. abzudämpfen.

10. Logistiksystem nach einem der vorhergehenden Ansprüche,
**dadurch gekennzeichnet, dass** die Übergabestation eine Längsfördereinheit aufweist, welche mit einem vertikal nach oben ausgerichteten Mitnehmer versehen ist, welcher bei Längsförderung der Plattform in der unterhalb der Plattform liegenden Ausnehmung liegt.

11. Logistiksystem nach einem der vorhergehenden Ansprüche,
**dadurch gekennzeichnet, dass** die Fördereinrichtung an ihrem vorderen Ende einen Haken aufweist, welcher mit einer am oberen Rand der Plattform ausgebildeten Ausnehmung in Eingriff bringbar ist und dass der Haken Teil der Fördereinrichtung ist, um die Plattform ein erstes Stück von der Ladefläche des Fahrzeugs zu ziehen oder ein letztes Stück auf die Ladefläche des Fahrzeugs zu schieben.

12. Logistiksystem nach einem der vorhergehenden Ansprüche,
**dadurch gekennzeichnet, dass** die Übergabestation mit einem Niederhalter versehen ist, um ein Abheben der Plattform von der Übergabestation beim Längstransport zu verhindern.

13. Logistiksystem nach einem der vorhergehenden Ansprüche,
**dadurch gekennzeichnet, dass** die Übergabestation/Fördereinrichtung zur Ausrichtung auf die Ladefläche um ihre zentrale Vertikalachse schwenkbar ist.

14. Logistiksystem nach einem der vorhergehenden Ansprüche,
**dadurch gekennzeichnet, dass** die Übergabestation auf Rollen gelagert ist und dass durch diese Rollen die Übergabestation einige Zentimeter, bevorzugt bis zu 30 cm quer zur Längsförderrichtung bewegbar ist.

15. Logistiksystem nach einem der vorhergehenden Ansprüche,
**dadurch gekennzeichnet, dass** die Übergabestation mit einer Messeinrichtung versehen ist, um die Parkposition des Fahrzeugs bzw. die Position (Höhe, Seitenlage, Winkelausrichtung) der Ladefläche des Fahrzeugs festzustellen und dass die Daten der Messeinrichtung in einer Datenverarbeitungseinrichtung verarbeitet werden und mittels dieser verarbeiteten Messdaten Antriebe gesteuert werden, um die Übergabestation auf die Ladefläche auszurichten.

16. Logistiksystem nach einem der vorhergehenden Ansprüche,
**dadurch gekennzeichnet, dass** die Übergabestation eine Einrichtung aufweist, mittels der die Ladefläche und/oder das Fahrzeug mit der Ladefläche heb- oder senkbar ist und zwar derart, um die Plattform eben (horizontal) auf die Ladefläche zu bewegen oder von dort weg zu bewegen.

17. Logistiksystem nach Anspruch 16,
**dadurch gekennzeichnet, dass** die Einrichtung zur Höhenverstellung der Ladefläche von der Datenverarbeitungseinrichtung gesteuert wird, welche die Messdaten über die Ausrichtung der Ladefläche verarbeitet.

18. Logistiksystem nach einem der vorhergehenden Ansprüche,
**dadurch gekennzeichnet, dass** zur Sicherung der Plattform auf der Ladefläche eine Verriegelung vorgesehen ist.

19. Logistiksystem nach einem der vorhergehenden Ansprüche,
**dadurch gekennzeichnet, dass** ein Hochregallager vorgesehen ist, welches die Übergabestation aufnimmt und welches mit einem Vertikalfördersystem ausgestattet ist, um die Plattform von der Übergabestation abzunehmen und in das Lager zu bewegen oder die entsprechende Plattform aus dem Lager zu entnehmen und auf die Übergabestation zu setzen.

20. Logistiksystem nach einem der vorhergehenden Ansprüche,
**dadurch gekennzeichnet, dass** ein Kommissionierungsbereich vorgesehen ist, in dem Waren kommissioniert und auf die Plattform gestellt werden und dass in diesem Bereich die Plattform in einer Vertiefung liegt, so dass die Oberseite der Plattform ebenerdig mit der umliegenden Fläche im Kommissionierungsbereich abschließt.

21. Logistiksystem nach Anspruch 20,
**dadurch gekennzeichnet, dass** Mittel vorgesehen sind, um die Plattform in diesem Bereich in die Vertiefung herabzulassen oder aus der Vertiefung anzuheben.

## Claims

1. Logistics system for transferring a platform to a vehicle and/or for taking this platform from the vehicle, wherein the logistics system furthermore has a transfer station for the platform, and furthermore a setting region is provided for the platform, this setting region being a bearing surface for the platform and/or being used for the picking of goods/products onto the platform, the goods to be placed on the platform preferably being arranged on pallets (Euro pallets), wherein the transfer station has a receiver, on which the platform comes to rest and from which the platform can be conveyed to the vehicle and/or to the setting region, wherein a first orientation device is formed, by means of which the height of the receiver can be adapted to the height of the loading surface of the vehicle, in that a second orientation device is formed, by means of which the receiver can be oriented with respect to the lateral and/or angular position to the loading surface of the vehicle, so that by means of a substantially linearly oriented conveyance, the platform can be conveyed from the receiver onto the loading surface of the vehicle and/or can be conveyed away from the loading surface onto the receiver, wherein the conveying device is formed as part of the transfer station and the platform has a first recess, in which a hook, cam, a driving device, a lock or the like of the conveying device engages in order to move the platform in the longitudinal direction, wherein the platform has external dimensions that are adapted to the loading surface of the vehicle, **characterised in that** guide rollers, which can cooperate with the lateral walls of the loading surface, are formed laterally on the platform.

2. Logistics system according to claim 1, **characterised in that** the platform has two first recesses, which can be made to engage with hooks, cams, locking means etc. of the conveying device, the first of these two recesses being formed below the platform to receive a driving device and the second of these recesses being formed at the upper edge above the platform.

3. Logistics system according to any one of the preceding claims, **characterised in that** the platform is provided with rollers on the lower side, which allow a movement of the platform in the longitudinal direction.

4. Logistics system according to any one of the preceding claims, **characterised in that** the platform is provided with an anti-slip covering.

5. Logistics system according to any one of the preceding claims, **characterised in that** the surface load of the platform is in the range from about 0.060 to 0.090, preferably in the region of 0.078 MPa.

6. Logistics system according to any one of the preceding claims, **characterised in that** the maximum roller loading of the rollers of the platform is approximately in the range from 550 to 750 kg, preferably approximately in the range from 600 to 620 kg.

7. Logistics system according to any one of the preceding claims, **characterised in that** the platform is substantially closed on the upper side and can be moved with pallet transporting devices, for example forklift trucks, lift trucks, roller carriages or the like.

8. Logistics system according to any one of the preceding claims, **characterised in that** the platform, at its upper-side edge, is provided with a series of recesses or eyelets, by means of which railings or fixing devices (ropes) etc. can be received.

9. Logistics system according to any one of the preceding claims, **characterised in that** at its outer edge, the platform is peripherally provided with a material, such as, for example, rubber or the like, which is in a position to absorb or damp impacts, shocks and the like.

10. Logistics system according to any one of the preceding claims, **characterised in that** the transfer station has a longitudinal conveying unit, which is provided with a vertically upwardly oriented driving device, which is located in the recess lying below the platform during longitudinal conveyance of the platform.

11. Logistics system according to any one of the preceding claims, **characterised in that** the conveying device, at its front end, has a hook, which can be made to engage with a recess formed on the upper edge of the platform and **in that** the hook is part of the conveying device in order to pull the platform by a first distance from the loading surface of the vehicle or to push it for a last distance onto the loading surface of the vehicle.

12. Logistics system according to any one of the preceding claims, **characterised in that** the transfer station is provided with a holding down device, in order to prevent the platform lifting from the transfer station during longitudinal transport.

13. Logistics system according to any one of the preceding claims, **characterised in that** the transfer station/conveying device, for orientation to the loading surface, can be pivoted about its central vertical axis.

14. Logistics system according to any one of the preceding claims, **characterised in that** the transfer station is mounted on rollers and **in that** the transfer station can be moved for a few centimetres by these rollers, preferably up to 30 cm, transverse to the longitudinal conveying direction.

15. Logistics system according to any one of the preceding claims, **characterised in that** the transfer station is provided with a measuring device in order to establish the sparking position of the vehicle or the position (height, lateral position, angular orientation) of the loading surface of the vehicle and **in that** the data of the measuring device are processed in a data processing device and drives are controlled by means of these processed measuring data to orient the transfer station to the loading surface.

16. Logistics system according to any one of the preceding claims, **characterised in, that** the transfer station has a device, by means of which the loading surface and/or the vehicle with the loading surface can be lifted or lowered, and specifically so as to move the platform in a level manner (horizontally) onto the loading surface or move it away therefrom.

17. Logistic system according to claim 16, **characterised in that** the device for the height adjustment of the loading surface is controlled by the data processing device, which processes the measuring data on the orientation of the loading surface.

18. Logistics system according to any one of the preceding claims, **characterised in that** a locking device is provided to secure the platform on the loading surface.

19. Logistics system according to any one of the preceding claims, **characterised in that** a high-bay warehouse is provided, which receives the transfer station and which is equipped with a vertical conveying system in order to remove the platform from the transfer station and move it into the warehouse or to take the corresponding platform from the warehouse and place it on the transfer station.

20. Logistics system according to any one of the preceding claims, **characterised in that** a picking region is provided, in which goods are picked and placed on the platform and **in that** in this region, the platform is located in an indentation, so the upper side of the platform ends level with the surrounding surface in the picking region.

21. Logistics system according to claim 20, **characterised in that** means are provided to lower the platform into the indentation in this region or to lift it out of the indentation.

## Revendications

1. Système logistique pour le transfert d'une plate-forme vers un véhicule et/ou pour la reprise de cette plate-forme depuis le véhicule,
le système logistique présentant en outre une station de transfert pour la plate-forme et une zone de dépose pour la plate-forme étant par ailleurs prévue, cette zone de dépose servant de surface d'appui pour la plate-forme et/ou également pour le commissionnement de marchandises sur la plate-forme, les marchandises à placer sur la plate-forme étant de préférence disposées sur des palettes (europalettes),
la station de transfert présentant un logement sur lequel la plate-forme vient se déposer et depuis lequel la plate-forme peut être transportée vers le véhicule et/ou la zone de dépose, un premier dispositif d'alignement étant formé, à l'aide duquel la hauteur du logement peut être adaptée à la hauteur de la surface de chargement du véhicule,
un deuxième dispositif d'alignement étant formé, à l'aide duquel le logement peut être aligné sur la surface de chargement du véhicule en ce qui concerne le positionnement latéral et/ou angulaire, de sorte que la plate-forme peut être transportée du logement vers la surface de chargement du véhicule et/ou de la surface de chargement vers le logement par un transfert orienté essentiellement en ligne droite, le dispositif de transport étant formé comme partie de la station de transfert et la plate-forme présentant un premier renfoncement, dans lequel un crochet, une came, un entraîneur, un verrouillage ou un élément similaire du dispositif de transport vient en prise pour déplacer la plate-forme en direction longitudinale,
la plate-forme présentant des dimensions extérieures qui sont adaptées à la surface de chargement du véhicule,
**caractérisé en ce que** des galets de guidage sont formés latéralement sur la plate-forme, lesquels peuvent coopérer avec les parois latérales de la surface de chargement.

2. Système logistique suivant la revendication 1,
**caractérisé en ce que** la plate-forme présente deux premiers renfoncements qui peuvent être mis en prise avec des crochets, cames, moyens de verrouillage etc. du dispositif de transport, le premier de ces deux renfoncements étant formé en dessous de la plate-forme pour le logement d'un entraîneur et le deuxième de ces renfoncements étant formé au bord supérieur au-dessus de la plate-forme.

3. Système logistique selon l'une quelconque des revendications précédentes,
**caractérisé en ce que** la plate-forme est pourvue à sa face inférieure de galets qui permettent un déplacement de la plate-forme en direction longitudinale.

4. Système logistique selon l'une quelconque des revendications précédentes,
**caractérisé en ce que** la plate-forme est pourvue d'un revêtement antidérapant.

5. Système logistique selon l'une quelconque des revendications précédentes,
**caractérisée en ce que** la charge répartie de la plate-forme est dans la plage d'environ 0,060 à 0,090, de préférence dans la plage de 0,078 MPa.

6. Système logistique selon l'une quelconque des revendications précédentes,
**caractérisé en ce que** la charge maximale des galets de la plate-forme est environ de l'ordre de 550 à 750 kg, de préférence environ de l'ordre de 600 à 620 kg.

7. Système logistique selon l'une quelconque des revendications précédentes,
**caractérisé en ce que** la plate-forme est essentiellement fermée à sa partie supérieure et est carrossable par des dispositifs de transport de palettes, par exemple des chariots élévateurs à fourche, des chariots de levage, des chariots ou similaires.

8. Système logistique selon l'une quelconque des revendications précédentes,
**caractérisé en ce que** la plate-forme est pourvue à son bord supérieur d'une rangée de renfoncements ou d'oeillets, à l'aide desquels des rambardes ou dispositifs de fixation (câbles) etc. peuvent être mis en place.

9. Système logistique selon l'une quelconque des revendications précédentes,
**caractérisé en ce que** la plate-forme est pourvue de manière périphérique à son bord extérieur d'un matériau tel que par exemple du caoutchouc ou similaire qui est en mesure d'absorber et d'amortir des coups, chocs et autres secousses.

10. Système logistique selon l'une quelconque des revendications précédentes,
**caractérisé en ce que** la station de transfert présente une unité de transport longitudinale qui est pourvue d'un entraîneur orienté verticalement vers le haut, lequel repose dans le renfoncement situé en dessous de la plate-forme lors du transport longitudinal de la plate-forme.

11. Système logistique selon l'une quelconque des revendications précédentes,
**caractérisé en ce que** le dispositif de transport présente à son extrémité avant un crochet, lequel peut être mis en prise avec un renfoncement formé au bord supérieur de la plate-forme et **en ce que** le crochet fait partie du dispositif de transport afin de tirer la plate-forme d'une première quantité hors de la surface de chargement du véhicule ou de la pousser de la dernière quantité sur la surface de chargement du véhicule.

12. Système logistique selon l'une quelconque des revendications précédentes,
**caractérisé en ce que** la station de transfert est pourvue d'un stabilisateur afin d'empêcher un soulèvement de la plate-forme au-dessus de la station de transfert lors du transport longitudinal.

13. Système logistique selon l'une quelconque des revendications précédentes,
**caractérisé en ce que** la station de transfert/dispositif de transport peut pivoter autour de son axe vertical central pour l'alignement sur la surface de chargement.

14. Système logistique selon l'une quelconque des revendications précédentes,
**caractérisé en ce que** la station de transfert est montée sur galets et **en ce que** ces galets permettent de déplacer la station de transfert de quelques centimètres, de préférence jusqu'à 30 cm transversalement à la direction de transport longitudinal.

15. Système logistique selon l'une quelconque des revendications précédentes,
**caractérisé en ce que** la station de transfert est pourvue d'un dispositif de mesure afin de détecter à position de rangement du véhicule ou la position (hauteur, position latérale, orientation angulaire) de la surface de chargement du véhicule et **en ce que** les données du dispositif de mesure sont traités dans un dispositif de traitement des données et que des entraînements sont commandés l'aide de ces données traitées afin d'aligner la station de transfert sur la surface de chargement.

16. Système logistique selon l'une quelconque des revendications précédentes,
**caractérisé en ce que** la station de transfert présente un dispositif à l'aide duquel la surface de chargement et/ou le véhicule peuvent être levés ou abaissés avec la surface de chargement, à savoir de façon à pouvoir déplacer la plate-forme à niveau (horizontalement) vers la surface de chargement ou de l'en éloigner.

17. système logistique suivant la revendication 18,
**caractérisé en ce que** le dispositif de réglage en hauteur de la surface de chargement est commandé par le dispositif de traitement des données, lequel traite les données de mesure concernant l'alignement de la surface de chargement.

18. Système logistique selon l'une quelconque des revendications précédentes,
**caractérisé en ce qu'**un verrouillage est prévu pour sécuriser la plate-forme sur la surface de chargement.

19. Système logistique selon l'une quelconque des revendications précédentes,
**caractérisé en ce qu'**un magasin à hauts rayonnages est prévu, lequel accueille la station de transfert et lequel est équipé d'un système de transport vertical afin de prendre la plate-forme de la station de transfert et de la déplacer dans le stock ou de prélever la plate-forme correspondante dans le stock et de 1ma placer sur la station de transfert.

20. Système logistique selon l'une quelconque des revendications précédentes,
**caractérisé en ce qu'**une zone de commissionnement est prévue, dans laquelle des marchandises sont commissionnées et placées sur la plate-forme et **en ce que**, dans cette zone, la plate-forme repose dans un renfoncement, de sorte que la face supérieure de la plate-forme est au même niveau que la surface environnante de la zone de commissionnement.

21. Système logistique suivant la revendication 20,
**caractérisé en ce que** des moyens sont prévus pour abaisser dans cette zone la plate-forme dans ce renfoncement ou la soulever hors du renfoncement.
